# EUROPEAN PATENT SPECIFICATION

(11) **EP 1 986 370 B1**
(45) Date of publication and mention of the grant of the patent: **11.04.2012**
(21) Application number: 07702287.9
(22) Date of filing: 06.02.2007
(51) Int. Cl.: H04L 12/24

(54) **CONTROL SYSTEM, DATA MESSAGE TRANSMISSION METHOD AND NETWORK DEVICE IN THE ETHERNET**
STEUERSYSTEM, DATENNACHRICHTENÜBERTRAGUNGSVERFAHREN UND NETZWERKEINRICHTUNG IM ETHERNET
SYSTÈME DE COMMANDE, PROCÉDÉ D'ÉMISSION DE MESSAGE DE DONNÉES, ET DISPOSITIF DE RÉSEAU ETERNET

(30) Priority: 10.02.2006 CN 200610003098
(43) Date of publication of application: 29.10.2008
(73) Proprietor: Huawei Technologies Co., Ltd., Shenzhen, Guangdong Province 518129 (CN)
(72) Inventor: HE, Jianfei, Shenzhen Guangdong Province 518129 (CN)
(74) Representative: Pfenning, Meinig & Partner GbR
(86) International application number: PCT/CN2007/000404
(87) International publication number: WO 2007/090346

(56) References cited:
- CN-A- 1 645 863
- CN-A- 1 645 863
- US-A1- 2003 193 901
- US-A1- 2004 151 181
- US-A1- 2004 228 323
- US-A1- 2006 002 370
- US-B1- 6 578 086

## Description

### Field of the Invention

The present invention relates to the field of network communication technologies, and particularly to a control system, a method for transporting a data packet and a network device in an Ethernet network.

### Background of the Invention

An Ethernet system includes three sub-systems, i.e. a data forwarding system, a control system and a management system. The data forwarding system is referred to as a data system for short. The three sub-systems are also referred to as a data plane, a control plane and a management plane, respectively.

The data plane forwards a user data packet and performs relevant processing directly. The control plane does not process the user data packet directly, but acquires a network topology with the use of a control protocol such as the Spanning Tree Protocol/Multiple Registration Protocol/Link Layer Discovery Protocol (STP/MRP/LLDP), to provide configurations of relevant parameters and status for connection establishment of a user data stream, and ensure the reliability of the connection establishment. The management plane is adapted to perform parameter configuration for the data plane and the control plane, and to trigger a task event.

The STP, as a layer 2 control protocol of the Ethernet network, is a distributed spanning tree protocol. According to the STP, a tree is constructed by transferring a spanning tree message, i.e. a Bridge Protocol Data Unit (BPDU), between bridges. Further, in the tree constrction, each bridge knows only the root port and the designated ports of the tree at this bridge.

In a traditional network interconnected through Ethernet bridges, the forwarding of a user data packet is performed in a connectionless way, which is characterized primarily as follows.
1. A tree is spanned through the control protocol in a bridging network, and the user data packet should be forwarded along the spanned tree.
2. The establishment of a data forward path of the user data packet is driven by the user data stream. When the user data packet reaches the bridging network, the data plane acquires a forward path through self-learning of the source address.
3. When the user data packet reaches the bridging network, if the forward path for the destination address of the user data packet has not been learned, the data packet is broadcasted on the tree; otherwise, the user data packet is forwarded along the learned path.

When designing technical solutions of the present invention, the inventor found that a traditional Ethernet system has disadvantages as follows.
1. The traditional Ethernet system cannot provide a traffic engineering service, resluting from employing the connectionless technology. In other words, it is impossible to provide a reliable service meeting a user's requirements through optimized usage of network resources according to the requirements of a user service and the conditions of the network resources.
2. In order to avoid a loopback, the traditional Ethernet network forwards a user data packet via a spanned tree which is a topology obtained by clipping the topology of a bridging network. As a result, some links in the bridging network are blocked and the network topology resources cannot be utilized effectively.
3. The traditional Ethernet network employs the Spanning Tree Protocol and generates a common topology within the bridging network through a distributed operation. However, an election process is required for determining the tree root, resulting in a long converging time for the tree spanning and a low recovering efficiency of a service when a failure occurs to the network.

At present, the Multi Protocol Label Switching (MPLS) technology is applied to Ethernet devices to enable the Ethernet network to support traffic engineering at the data plane.

Because the MPLS technology changes the encapsulation structure at the data plane of the traditional Ethernet network, the MPLS technology has deviated from the Ethernet technology in terms of the data plane. Therefore, the MPLS technology cannot be applied compatibly to the existing Ethernet devices. Currently, no consideration has been given to how to extend the application of an MPLS control protocol to an Ethernet network. Consequently, an Ethernet system still cannot support automatic establishment of a Label Switched Path (LSP).

In the pre-research project of Generalized Multi-Protocol Label Switching (GMPLS) control plane for point-to-point Ethernet Label Switching (GELS), a research is being made on how to extend GMPLS to an Ethernet network, to realize label switching in the Ethernet network, and fulfill the requirements of traffic engineering and the like.

In the GELS pre-research project, the essential technical ideas of the research are primarily as follows.
1. Without modifying the existing data encapsulation structure of the Ethernet network, a Virtual Local Area Network (VLAN) identifier plus a Media Access Control (MAC) address is used as a forward label, and the path to the forward label is established by the control plane.
2. To enable automatic establishment of the path to the forward label in the Ethernet network, it needs to extend the existing control protocol of the GMPLS to be applicable in the Ethernet system.

The traditional Ethernet technology is relatively simple, so that an Ethernet device has advantages of low cost, flexible applications, convenience and the like. However, the GELS substantially abandons the layer 2 control protocol of the traditional Ethernet network, and employs relatively complicated protocols for signaling, routing, etc. to control the Ethernet network. Furthermore, the GELS supports various switching capabilities. Therefore, the cost of the Ethernet device as well as the maintenance cost and the like increase accordingly.

Currently, there is another solution based upon improvements of the existing Ethernet technology. The solution obtains a network topology through a link state protocol such as Open Shortest Path First (OSPF) or Intermediate System-Intermediate System (IS-IS). The obtained network topology is used for: (1) calculating a shortest path for forwarding a unicast data packet; and (2) calculating a tree for forwarding a broadcast data packet or a multicast data packet.

The improved solution provides an algorithm for calculating a spanned tree according to the topology information of the entire network. This algorithm can calculate a shortest path between any two nodes for a unicast data packet, and also provide a tree path required for forwarding a multicast data packet or a broadcast data packet.

The improved solution enables a function of shortest path routing similar to that of an IP network. However, in routing and addressing, a MAC address of a bridge instead of a MAC address of a terminal is used. This improved solution creates a data forwarding table according to destination addresses only, without taking into account the bandwidth resource requirements of an end-to-end service data stream, and cannot implement the Ethernet traffic engineering according to the usage of the network resources and the service requirements.

US 2006/002370 A1 discloses a control plane/transport plane architecture for controlling the Ethernet carrier network. A Ethernet control plane comprising a number of connection controllers (CCs) is used to configure forwarding tables in Ethernet switches. Each CC controls the switching of its respective switch using Connection Control Interface (CCE) signalling.

### Summary of the Invention

A control system, a method for transporting a data packet, and a network device in an Ethernet network are provided in embodiments of the present invention, so that the Ethernet network can support traffic engineering conveniently and at a low cost.

The present invention provides a control system in an Ethernet network. The control system includesa route control entity and a connection control element forward path control entity.

The route control entity is adapted to acquire link information of the Ethernet network which is obtained through a layer 2 control protocol of the Ethernet network, set up and maintain a network topology of the Ethernet network according to the link information in a centralized way, and calculate a route between end bridges of a connection for a connection establishment request received by the control system according to the network topology.

The connection control element is adapted to acquire, upon receiving a connection establishment request, route information of a connection needed to be establishedfrom the route control entity, and send a label registration use request or label registration release request to each of the link management entities corresponding to the bridges through which the route passes.

The route control entity includes a network topology maintaining module and a route calculating module.

The network topology maintaining module is adapted to set up and maintain information of the network topology of the Ethernet network according to the received link information from the link management entities, and modify the information of the network topology according to the route information of the connection needed to be established or released.

The route calculating module is adapted to calculate and output the route information of the connection needed to be established to the connection control element according to the information of the network topology.

Each of the link management entities is a distributed control entity, and is located in a bridge device or stands alone with a bridge device.

The connection control element is of a centralized structure or a parent-child structure.

If being of the centralized structure, the connection control element controls a connection of a plurality of bridges in the bridging network. The connection control element employing the centralized structure is a centralized control entity.

If being of the parent-child structure, the connection control element includes a parent connection control element and child connection control elements, the number of which corresponds to the number of the bridges.

The parent connection control element is a centralized control entity. Upon receiving a connection establishment request or connection release request, the parent connection control element acquires the route information of the connection needed to be established or released, and sends connection configuration information to each of the child connection control elements corresponding to the bridges through which the route passes.

The child connection control elements employ a way of distributed control, and are distributed control entities. Each of the child connection control elements controls a single bridge corresponding to the child connection control element. Each of the child connection control elements sends a label registration use request or label registration release request to a link management entity corresponding to the child connection control element according to the connection configuration information sent from the parent connection control element.

The child connection control element is located in a bridge device, or stands alone with a bridge device.

The route control entity and the connection control element are centralized control entities. A signaling channel employing a layer 2 switching configuration is provided between the centralized control entity and the link management entity and is adapted to exchange information between the centralized control entity and the link management entity.

A method for transporting a data packet in an Ethernet network is provided in another embodiment of the present invention. The method includes the steps of:
detecting and outputting, by a link management entity, link information between a bridge corresponding to the link management entity and a neighboring bridge to a route control entity according to a layer 2 control protocol of an Ethernet network;
acquiring according to a layer 2 control protocol of the Ethernet network, by a route control entity, link information of the Ethernet network, and setting up and maintaining a network topology of the Ethernet network according to the link information in a centralized way; calculating according to the network topology, by the route control entity, a route between end bridges of a connection for a connection establishment request received by the control system,;
acquiring, by a connection control element, upon receiving a connection establishment request, the route of a connection needed to be established from the route control entity, and sending a label registration use request or label registration release request to each of the link management entities corresponding to the bridges through which the route passes;and
configuring, by the link management entity, forward path information of a data system of each bridge through which the connection passes according to information of the label registration use request or label registration release request sent from the connection control element; and forwarding a data packet by the data system of each bridge according to the forward path information.

The step of acquiring link information of the Ethernet network, by a route control entity, and setting up and maintaining a network topology of the Ethernet network according to the link information in a centralized way includes: when detecting a link between a bridge corresponding to a link management entity in the control system and a neighboring bridge, or detecting a change in status information of a link, reporting, by the link management entity, the link information according to the layer 2 control protocol of the Ethernet network; setting up and maintaining the network topology of the Ethernet network in a centralized way, by a route control entity in the control system, according to the link information reported by the link management entity, and/or resource configuration information configured and sent from a management plane.

The link information includes configuration information of the discovered link, link failure information, and link failure removal information.

In addition, when receiving the configuration information of the detected link, the route control entity adds the link into the network topology. When receiving the link failure information, the route control entity sets status of the corresponding link to failing status. When receiving the link failure removal information, the route control entity sets the status of the corresponding link to normal status.

The step of sending a label registration use request or label registration release request to each of the link management entities" and configuring, by the link management entity, forward path information of a data system of each bridge through which the connection passes includes: sending according to route information in the connection establishment request, by a connection control element in the control system, a label registration use request to the link management entity corresponding to each bridge indicated in the route information; and configuring according to the received label registration use request, by the link management entity, the forward path information in the data system of the bridge corresponding to the link management entity.

The step of calculating according to the network topology, by the route control entity, a route between end bridges of a connection for a connection establishment request received by the control system, sending a label registration use request or label registration release request to each of the link management entities and configuring, by the link management entity, forward path information of a data system of each bridge through which the connection passes includes: receiving, by a connection control element in the control system, the connection establishment request, and sending information of a connection route use request to the route control entity; calculating according to the network topology, by the route control entity, a route between end bridges of a connection for the received connection route use request, and returning the calculated route information to the connection control element; sending according to the received route information, by the connection control element, a label registration use request to the link management entity corresponding to each bridge through which the connection passes; and configuring according to the received label registration use request, by the link management entity, the path forwarding information in the data system of the bridge corresponding to the link management entity.

The connection establishment request is a point-to-point connection establishment request, and the information of the connection route use request includes a MAC address of a source bridge and a MAC address of a destination bridge. Alternatively, the information of the connection route use request includes bandwidth information and/or a connection direction attribute, in addition to a MAC address of a source bridge and a MAC address of a destination bridge.

Further, the step of calculating according to the network topology, by the route control entity, a route between end bridges of a connection for the received connection route use request, and returning the calculated route information to the connection control element includes: calculating according to a currently active network topology, by the route control entity, a point-to-point fully explicit route with ingress and egress ports for the received connection route use request, and returning the route information to the connection control element; and if the bandwidth information is included in the connection route use request, updating the network topology by the route control entity according to the bandwidth information and the calculated point-to-point fully explicit route.

The connection establishment request is a point-to-multipoint broadcast connection establishment request, and the information of the connection route use request includes a MAC address of one source bridge and MAC addresses of a plurality of destination bridges.

Alternatively, the information of the connection route use request includes bandwidth information and/or a bridge constraint condition, in addition to a MAC address of one source bridge and MAC addresses of a plurality of destination bridges. Further, the step of calculating according to the network topology, by the route control entity, a route between end bridges of a connection for the received connection route use request, and returning the calculated route information to the connection control element includes: calculating, with the source bridge as a root bridge, by the route control entity, a spanned tree for the received connection route use request according to a currently active network topology, and clipping off leaves of the tree which are not destination addresses; returning, by the route control entity, structure information of the clipped tree as route information to the connection control element; and if the bandwidth information is included in the connection route use request, updating by the route control entity the network topology according to the bandwidth information and the structure information of the tree.

The connection establishment request is a multipoint-to-multipoint broadcast connection establishment request, and the information of the connection route use request includes MAC addresses of a plurality of bridges. Alternatively, the information of the connection route use request includes bandwidth information, and/or root bridge information, and/or a bridge constraint condition, in addition to MAC addresses of a plurality of bridges.

Further, the step of calculating according to the network topology, by the route control entity, a route between end bridges of a connection for the received connection route use request, and returning the calculated route information to the connection control element includes: acquiring, by the route control entity, the root bridge information in the connection route use request; or, if no root bridge information is configured in the connection route use request, determining a root bridge by the route control entity according to a predetermined strategy; calculating according to a currently active network topology and the root bridge, by the route control entity, a spanned tree for the received connection route use request, and clipping the spanned tree, so that each leaf of the tree is a bridge in the connection route use request; returning, by the route control entity, structure information of the clipped tree as route information to the connection control element; and if information of a committed information rate is included in the connection route use request, updating the network topology by the route control entity according to the bandwidth information and the structure information of the tree.

The method further includes: if bandwidth information is included in the connection establishment request, sending, by the connection control element, the bandwidth information to the link management entity; when determining that the bandwidth information is included in the received route information, sending, by the link management entity, the bandwidth information to a data system; and reserving a resource according to the bandwidth information and performing traffic control by the data system.

The method further includes: receiving, by a connection control element in the control system, a connection release request, acquiring route information corresponding to the connection release request, and sending a label registration release request to a link management entity corresponding to each bridge through which the connection passes, according to the route information; and removing according to the received label registration release request, by the link management entity, corresponding path forwarding information in a data system of a bridge corresponding to the link management entity.

The connection control element acquires the route information corresponding to the connection needed to be released from route information stored in the connection control element itself.

If the connection control element in the control system is of a parent-child structure, a parent connection control element in the connection control element acquires the route information corresponding to the connection needed to be released according to route information stored in the parent connection control element itself or route information stored in a child connection control element.

The connection establishment request or connection release request is sent to the connection control element by a management system or by an upper layer application.

If the connection is a point-to-point connection, the connection establishment request includes a MAC address of one source bridge, a MAC address of one destination bridge and label information identifying the connection. If the connection is a point-to-multipoint connection, the connection establishment request includes a MAC address of one source bridge, MAC addresses of a plurality of destination bridges and label information identifying the connection. If the connection is a multipoint-to-multipoint connection, the connection establishment request includes a plurality of bridges and label information identifying the connection.

If the connection is a point-to-point connection, the label information includes an upstream VLAN identifier and/or a MAC address of an upstream destination bridge. Alternatively, the label information includes an upstream VLAN identifier and/or a MAC address of a destination bridge, and a downstream VLAN identifier and/or a MAC address of a destination bridge. If the connection is a point-to-multipoint broadcast connection or multipoint-to-multipoint broadcast connection, the label information includes a VLAN identifier and/or a multicast MAC address.

If the connection is a point-to-multipoint connection and the label information includes a multicast MAC address, the connection control element reassigns a VLAN identifier to the connection, establishes a correspondence between the reassigned VLAN identifier and the label information, and utilizes the reassigned VLAN identifier as the label information identifying the connection.

If the connection is a point-to-point connection, the connection establishment request further includes bandwidth information and information of a point-to-point fully explicit route with ingress and egress ports. If the connection is a point-to-multipoint broadcast connection, the connection establishment request further includes bandwidth information and structure information of a tree or a bridge constraint condition. If the connection is a multipoint-to-multipoint broadcast connection, the connection establishment request further includes bandwidth information and structure information of a tree or a bridge constraint condition.

The method further includes: maintaining, by a connection control element in the control system, a connection affected by a failure, according to connection failure status information received from a data system or label failure status information received from a link management entity in the control system; and if the connection control element in the control system is of a parent-child structure, maintaining, by a parent connection control element, the connection affected by the failure, according to the connection failure status information received from the data system or the label failure status information received from the link management entity in the control system.

If the connection control element in the control system is of a parent-child structure, information is exchanged between a parent connection control element and the route control entity, and connection configuration information is exchanged between the parent connection control element and a child connection control element, or the connection configuration information and connection failure status information are exchanged between the parent connection control element and the child connection control element. Further, according to the connection failure status information, the parent connection control element maintains a connection affected by a failure; according to the received connection configuration information, the child connection control element sends a label registration use request or label registration release request to a link management entity corresponding to the child connection control element.

It can be seen from the above description of the technical solutions that, with the use of an existing layer 2 control protocol of the Ethernet network in the embodiments of the present invention, a network topology is set up and maintained in a centralize way, route information of a connection is calculated in a centralize way according to a particular connection establishment request, and a path forwarding table is created for each bridge through which the connection between end bridges passes according to the route information, thereby enabling the manageability of a data stream transported in the Ethernet network, and enabling the controllability of data traffic in the Ethernet network. The embodiments of the present invention do not need to change the encapsulation structure at the data plane of the Ethernet network, do not depart from the Ethernet technologies, and utilize the layer 2 control protocol of the Ethernet network. Further, the use of the traditional layer 2 control protocol of the Ethernet system enables the technical solutions of the embodiments of the present invention to be applied conveniently in the traditional bridge devices of the Ethernet network. The embodiments of the present invention enable the Ethernet network to support the traffic engineering with low-cost modifications to the Ethernet network.

### Brief Description of the Drawings

Figure 1 is a first schematic diagram illustrating a control system in an Ethernet network according to an embodiment of the present invention.
Figure 2 is a second schematic diagram illustrating a control system in an Ethernet network according to an embodiment of the present invention.
Figure 3 is a first schematic diagram illustrating establishment of a connection according to an embodiment of the present invention.
Figure 4 is a second schematic diagram illustrating establishment of a connection according to an embodiment of the present invention.
Figure 5 is a first schematic diagram illustrating creation of a tree according to an embodiment of the present invention.
Figure 6 is a second schematic diagram illustrating creation of a tree and a path forwarding table for the tree according to an embodiment of the present invention.
Figure 7 is a third schematic diagram illustrating a control system in an Ethernet network according to an embodiment of the present invention.
Figure 8 is a fourth schematic diagram illustrating a control system in an Ethernet network according to an embodiment of the present invention.

### Detailed Descriptions of the Embodiments

The embodiments of the present invention relate to a bridging network, and particularly provide a control system for a bridging network within a single area. In the embodiments of the present invention, a new control system is built for a bridging network by extending an existing control system of a traditional Ethernet network. In other words, a new control plane is built for the traditional Ethernet network. By extending a traditional layer 2 control protocol of the Ethernet network such as the LLDP, and employing a centralized control method in which a network topology is set up and maintained in a centralized way and a route between end bridges of a connection is calculated in a centralized way, the control system according to the embodiments of the present invention is allowed to establish in advance a forward path between end bridges of the connection for a data stream, thus enabling a data system of each bridge to forward a data packet according to the forward path information configured by the control system, and thereby enabling data streams in the Ethernet network to be manageable, the Ethernet network to provide the Quality of Service (QoS) guarantee for a user, and the traffic engineering to be implemented in the Ethernet network conveniently and simply.

The technical solutions regarding a control system, a network device and a method for transporting a data packet provided in the embodiments of the present invention will be further described below with reference to the accompanying drawings.

A control system according to the present invention primarily includes a Route Control Entity (RCE) and a forward path control entity. The forward path control entity includes a Connection Control Element (CCE) and Link Management Entities (LMEs).

Each of the Link Management Entities is a distributed control entity. In other words, the Link Management Entities employs a distributed structure. A distributed control entity refers to an entity controlling a single bridge directly. The Link Management Entity may be embedded into a bridge device or stands alone with a bridge device.

The RCE and the CCE are centralized control entities. In other words, the RCE and the CCE employ a centralized structure. A centralized control entity refers to an entity capable of controlling a plurality of bridge devices. In this case, the RCE and the CCE may be located in a server which may be one of the plurality of bridge devices. A signaling channel is provided between the server and each LME. If each LME is embedded into a bridge device, a signaling channel is provided between the server and each of the bridges in the bridging network. The signaling channel is primarily used for information exchange between the RCE, CCE and each LME. Each signaling channel may be configured only through layer 2 switching in an embodiment of the present invention.

The operations of the LME are primarily as follows. With the use of a layer 2 control protocol of the Ethernet network such as the LLDP, the LME reports status information of a link between the bridge corresponding to the LME and a neighboring bridge to the Route Control Entity. Upon receiving a label registration use request from the Connection Control Element, the LME configures forward path information in the data system of the bridge corresponding to the LME, i.e., configure a path forwarding table in the data system of the bridge corresponding to the LME according to the label registration use request. Upon receiving a label registration release request from the Connection Control Element, the LME removes the forward path information stored in the data system of the bridge corresponding to the LME.

The operations of the CCE are primarily as follows. The CCE receives a connection establishment request which may be sent from the management system or from another upper layer application. Upon receiving the connection establishment request, the CCE acquires route information in the connection establishment request, i.e., acquire route information between end bridges of the connection.

For a point-to-point (P2P) connection, the above route information acquired by the CCE refers to a P2P fully explicit route with ingress and egress ports from the source bridge to the destination bridge. An explicit route is named with respect to a connection, and contains information of hops through which this connection passes and conditions to be met by the hops. For example, the explicit route contains information of all the hops along the connection. Here, the information of a single hop may include a bridge identifier. Further, the information of the single hop may include an ingress port identifier or egress port identifier of the bridge through which the connection passes. The explicit route information may include one or more explicit route information objects, which may be information of a hop through which the connection passes. The information of a hop may include a bridge and may further include an ingress port or egress port of the bridge through which the connection passes. Further, the explicit route information object may be information of a hop through which the connection is not allowed to pass, or may be that a hop selected for the connection must belong to a collection of hops. The P2P fully explicit route with ingress and egress ports is an explicit route and includes information of each hop through which a connection passes. The information of each hop should include an identifier of an egress port of the bridge for this hop connected to a bridge for a next hop, in addition to a bridge identifier. Further, if there is a previous hop connected to this hop, the information of each hop should also include an identifier of an ingress port, i.e. an identifier of a local port connected to a bridge for the previous hop.

For a point-to-multipoint broadcast connection, the above route information acquired by the CCE refers to structure information of a tree from the source bridge to the destination bridge. Structure information of a tree is primarily used to identify a tree, and includes identifiers of all bridges on the tree, including an identifier of a root on the tree. For each of the bridges on the tree, a root port or a designated port of the tree at this bridge is included in the structure information of the tree, and this bridge is directly connected to its parent bridge through the root port, and directly connected to its child bridge through the designated port. A direct connection of two bridges means that these two bridges are connected to each other through a point-to-point physical link, or through a physical Local Area Network (LAN). In other words, no other bridge device exists between these two bridges.

For a multipoint-to-multipoint broadcast connection, the above route information acquired by the CCE refers to structure information of a tree among a plurality of bridges.

The CCE may acquire route information from the RCE through interaction with the RCE. Further, the CCE may acquire route information directly from a connection establishment request containing route information between end bridges of the connection. Upon obtaining the route information of the connection, the CCE sends a label registration use request to a Link Management Entity corresponding to each of the bridges through which the forward path passes. When determining that the connection needs to be released, the CCE sends a label registration release request to the LME corresponding to each of the bridges through which the forward path passes according to the route information corresponding to the connection. Upon receiving connection failure status information or label failure status information reported from the external, the CCE may perform maintenance management on the connection, such as repair the connection failure through a re-route mechanism. The above-described connection failure status or label failure status reported from the external includes: connection failure status reported by the data system and label failure status reported by the Link-layer Management Entity. The CCE may also release the connection upon receiving a connection release request from the management system or another upper-layer application.

The primary operations of the RCE are implemented by a network topology maintaining module and a route calculating module. The primary operations of the network topology maintaining module and the route calculating module will be described below. The network topology maintaining module is primarily used to receive link information, and set up and maintain network topology information of the entire bridging network according to the received link information in a centralized way. The link information received by the network topology maintaining module may be reported by the LME according to a layer 2 control protocol of the Ethernet network, such as the LLDP, or may be configured by and sent from the management system. When the CCE should acquire route information between end bridges of a connection from the RCE, in other words, when the RCE receives information of a connection route use request from the CCE, the route calculating module calculates the route information between the end bridges according to the information contained in the connection route use request, such as MAC addresses of the end bridges, and sends the calculated route information to the CCE. In the case where bandwidth information such as a Committed Information Rate (CIR) is included in the connection route use request, when the route calculating module returns the route information to the CCE, the network topology maintaining module updates network topology structure information according to the connection route information calculated by the route calculating module. For example, the CIR of the connection is subtracted from the spare bandwidth of the link through which the connection route passes. When the RCE receives from the CCE information of a connection route release request, and the connection corresponding to the request has a bandwidth attribute such as the CIR, the network topology maintaining module maintains the network topology structure according to the information of the connection route release request. For example, the CIR of the released connection is added to the spare bandwidth of the link through which the connection route passes in the network topology. The bandwidth information is taken into sufficient account when the RCE sets up and maintains the network topology and calculates the route information in a centralized way, thus enabling the control system to control the data system to implement the bandwidth resource reservation and traffic control, and enabling the Ethernet network to provide the Quality of Service guarantee for a user.

Hereinafter, a control system and a method for transporting a data packet in a bridging network according to the embodiments of the present invention will be described in detail with reference to the accompanying drawings.

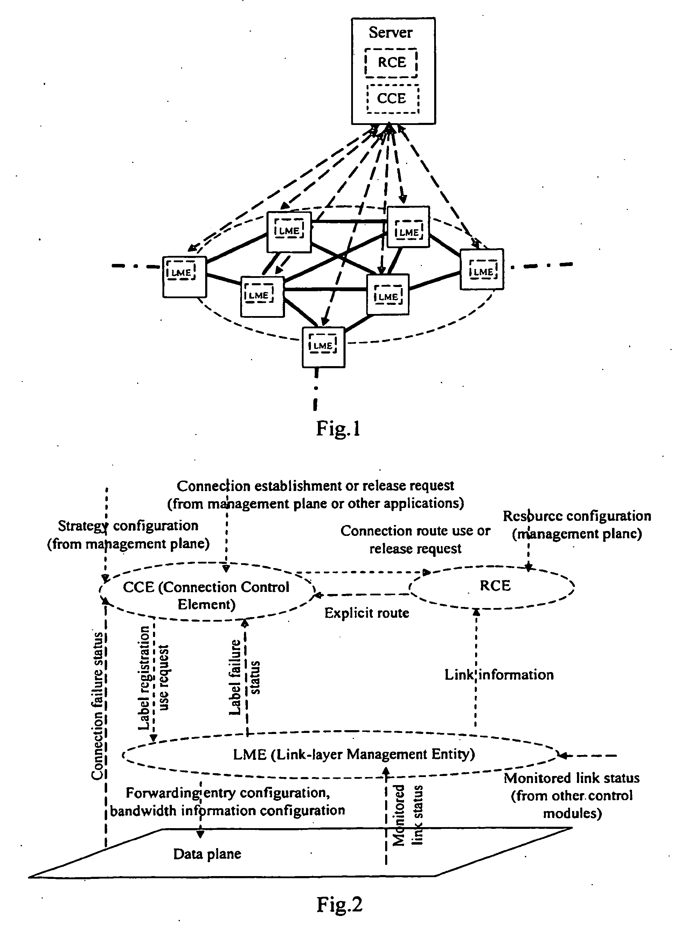

Figures 1 and 2 show schematic diagrams of a bridging network according to an embodiment of the present invention.

In Figure 1, both an RCE and a CCE which are centralized control entities are located in a server as shown in Figure 1, and LMEs which are distributed control entities are embedded into bridge devices. Signaling channels are provided between the server and the bridges. In Figure 1, the dotted lines between the server and the bridges denote signaling channels, the bold solid lines between the bridges denote links connecting the bridges in the bridging network, and the dash-dot lines denote external links connected to devices external to the bridging network.

The information exchange among the control entities in the control system, between a control system and a management system, as well as between a control system and a data system according to the present invention is illustrated in Figure 2. The above information exchange primarily includes: information relating to a connection route is exchanged between the CCE and the REC; information relating to a connection label is exchanged between the CCE and the LME, for example, the LME receives a link status monitoring report from the data system, and reports information of an affected label, i.e. a label affected by a link failure, to the CCE according to link status; and the data plane may monitor an established connection directly, for example, the data plane may configure the connections needed to be monitored on an Operation, Administration and Maintenance (OAM) functional block of the data system through the management system or the CCE, and report the failure status of the connection to the CCE. Because each bridge corresponds to a separate LME, a control system may include a plurality of LMEs. For the sake of simplicity, only one LME is shown in Figure 2.

In Figure 2, the LME is adapted to discover a physical link connected between the bridge where the LME is located, i.e. the local bridge, and a neighboring bridge, i.e., to detect configuration information of the link between the local bridge and the neighboring bridge. When discovering a new link or a change in failure status of a link, the LME reports the discovered link information to the RCE. According to the present invention, the link information includes: configuration information of a link and failure status information of a link. The LME receives a label registration use request sent from the CCE, and configures forward path information in the data system of the bridge where the LME is located according to the label registration use request, for example, configures a corresponding path forwarding entry in a path forwarding table. If bandwidth information is included in the label registration use request, the LME further needs to instruct the data system to reserve a bandwidth resource according to this bandwidth information and performs traffic control. Upon discovering a change in the link failure status, the LME informs the CCE of the label failure status information. The label failure status information may be "disappearing" when a failure occurs to the link, and may be "normal" when no failure occurs to the link.

The RCE is located in a server of the bridging network, and is primarily adapted to set up and maintain a network topology of the entire bridging network and calculate a route between end bridges of a connection. When receiving the link information reported by the LME, the RCE sets up or maintains a network topology. Further, the RCE may receive the link configuration information, i.e. resource configuration information, sent from the management system. Upon receiving the resource configuration information, the RCE sets up or maintains a network topology. Upon receiving information of a connection route use request from the CCE, the RCE calculates, according to information in the information of the connection route use request, such as MAC addresses of end bridges of a connection and bandwidth, information of a route between end bridges of a connection which satisfies the request, and returns the calculated route information, such as information of a fully explicit route with ingress and egress ports and structure information of a tree, to the CCE. If the information of the connection route use request includes bandwidth information, based on which the RCE calculates information of the route between end bridges of the connection, then the RCE needs to update the network topology according to the route of the connection and the bandwidth information contained in the route information returned to the CCE. Upon receiving a connection route release request from the CCE, the RCE updates the network topology according to the route to be released and the bandwidth resource in the route.

The CCE is located in a server of the bridging network, and is primarily adapted to send information of a label registration use request or label registration release request to an LME corresponding to each bridge in the bridging network, to establish a connection between bridges or releasing a connection between bridges. The CCE also needs to manage the established connection. In other words, upon determining that a failure occurs to the established connection, the CCE performs processing such as connection recovery and connection release. When receiving connection failure status information from the data system or label failure status information from the LME, the CCE may determine whether the established connection fails. Here, the connection failure status includes failing status and normal status, i.e. non-failing status.

Hereinafter, specific operations of the LME, the CCE and the RCE will be described.

The operations of the LME are primarily as follows.

The LME discovers a link between the local bridge and a neighboring bridge through a layer 2 control protocol of the Ethernet network such as the LLDP. The local bridge is connected directly to the neighboring bridge via the link. The neighboring bridge may also be referred to as a remote bridge. Further, the link may be an aggregated physical link or a single physical link.

The LME reports to the RCE configuration information of the above discovered or a configured link, which includes a MAC address of the local bridge, an identifier of a local link port, a MAC address of the remote bridge, an identifier of a remote link port and a bandwidth capacity of the link.

The LME configures a path forwarding entry in the data system according to information carried in a label registration use request upon receiving the label registration use request from the CCE, and instructs the data system to delete a corresponding path forwarding entry established originally upon receiving a label registration release request sent from the CCE. If the label registration use request or label registration release request sent from the CCE includes bandwidth information, the data plane shall be instructed to reserve a corresponding resource and perform traffic control. Here, the path forwarding entry is determined from an egress label and a corresponding port in a registration request item.

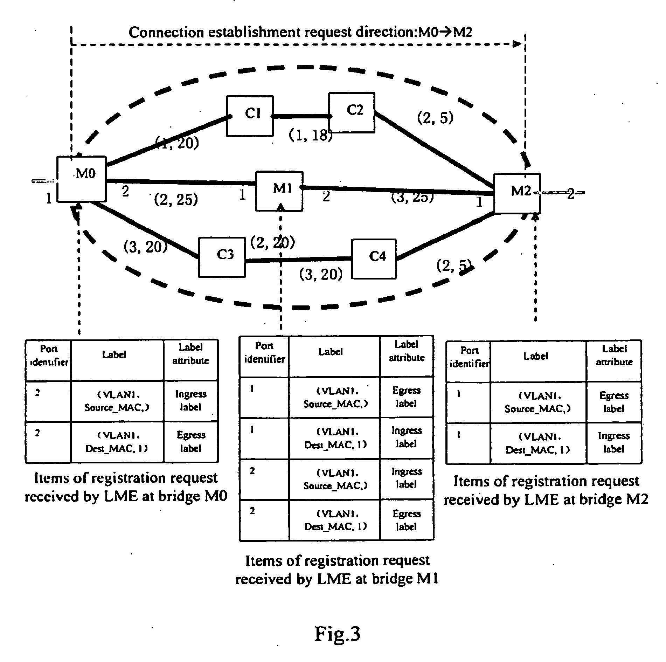

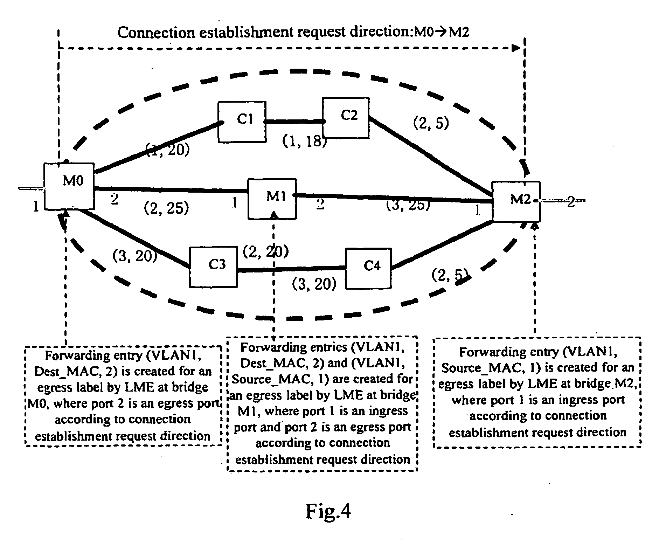

Assume that the RCE generates a route as shown in Figures 3 and 4 for the P2P connection according to the route query information received by the RCE. Further, in (a, b) of Figures 3 and 4, "a" denotes a link cost, and "b" denotes spare bandwidth of a link. Assume that the information of the connection establishment request received by the CCE includes a source bridge M0, a destination bridge M2, a downstream label (VLAN1, Dest_MAC), an upstream label (VLAN1, Source_MAC) and a Committed Information Rate 20 of the connection. The connection route use request is sent to the RCE by the CCE, and the route information generated by the RCE is M0 to M1 to M2.

If the label registration use requests sent by the CCE to the source bridge M0, the destination bridge M2 and an intermediate bridge M1 respectively includes information as shown in Figure 3, then the respective LMEs in the source bridge M0, the destination bridge M2 and the intermediate bridge M1 configure path forwarding entries as shown in Figure 4 according to the label registration use requests sent from the CCE.

The LME may diagnose a link failure through a layer 2 control protocol of the Ethernet network, or acquire link failure status according to failure detection advice from the data plane. When a link fails or a link failure disappears, the LME needs to report the failure status of the link to the RCE, and inform the CCE of information of labels affected by the link failure. If a link is in failing status, the relevant label status may be "failing"; and when a link is in non-failing status, the relevant label status may be "normal".

Upon receiving a connection establishment request sent from the management plane or another upper layer application, the CCE needs to establish a connection according to the connection establishment request. The connection establishment request received by the CCE may be a point-to-point (P2P) connection establishment request, a point-to-multipoint (P2MP) broadcast connection establishment request, or a multipoint-to-multipoint (MP2MP) broadcast connection establishment request.

The P2P connection establishment request primarily includes the following attribute values.

1. A MAC address of a source bridge and a MAC address of a destination bridge. Here, the source bridge and the destination bridge may be referred to as end bridges of the connection.

2. A label value which is unique within the bridging network. If the connection is a unidirectional connection, the label information includes an upstream label which may be a VLAN identifier and a destination MAC address. The upstream label may also be a destination MAC address. If the connection is a bidirectional connection, the label information may further include a downstream label which may be a VLAN identifier and a destination MAC address. The downstream label may also be a destination MAC address.

Optionally, the P2P connection establishment request may further include one or more attribute values as follows.

1. Bandwidth information, which may include a Committed Information Rate (CIR) and a Peak Information Rate (PIR), or include only the Peak Information Rate of the connection or only the Committed Information Rate of the connection.

2. An explicit route.

The P2MP broadcast connection establishment request primarily includes the following attribute values.

1. A MAC address of a source bridge and MAC addresses of M (M>1) destination bridges. Here, the source bridge and the destination bridges are referred to as end bridges of the connection.

2. A label value which is unique within the bridging network. Here, the label value may be a VLAN identifier, or a VLAN identifier and a multicast MAC address, or a multicast MAC address.

Optionally, the P2MP broadcast connection establishment request may further include one or more attribute values as follows.

1. Bandwidth information, which may include a Committed Information Rate (CIR) and a Peak Information Rate (PIR), or include only the Peak Information Rate of the connection or only the Committed Information Rate of the connection.

2. One of "structure information of a tree" and "a bridge constraint condition", where the bridge constraint condition defines a set of limited bridges or a set of excluded bridges of a connection. In other words, the bridge constraint condition may be a set of bridges allowed to be passed through by a connection, or a set of bridges not allowed to be passed through by a connection.

The MP2MP broadcast connection establishment request primarily includes the following attribute values.

1. MAC addresses of M bridges, where M is an integer larger than 2. Here, the M bridges may be referred to as end bridges of a connection;

2. A label value which is unique within the bridging network. Here, the label value may be a VLAN identifier, or a VLAN identifier and a multicast MAC address, or a multicast MAC address.

Optionally, the MP2MP broadcast connection establishment request may further include one or more attribute values as follows.

1. Bandwidth information, which may include a Committed Information Rate and a Peak Information Rate (PIR), or include only the Peak Information Rate of the connection or only the Committed Information Rate of the connection.

2. One of "structure information of a tree" and "a bridge constraint condition".

A specific process of establishing a connection by the CCE upon receiving a P2P connection establishment request includes the following steps.

At step 1, if the P2P connection establishment request includes information of a fully explicit route with ingress and egress ports, the process proceeds to step 2; otherwise, the CCE queries the RCE about a fully explicit route. In other words, the CCE sends to the RCE a connection route use request which contains connection route query information including mainly a MAC address of a source bridge and a MAC address of a destination bridge. The connection route query information may also include bandwidth information of the connection, a connection direction attribute, i.e. bidirectional connection information or unidirectional connection information, explicit route information and the like.

At step 2, when obtaining the information of the P2P fully explicit route with ingress and egress ports, the CCE acquires information of each hop from the fully explicit route, and sends a label registration use request according to the information of the hop to an LME controlling the hop. The label registration use request includes one or more registration items including a label, a port identifier, a label attribute, etc. Here, for an upstream label and an ingress port of a connection, the attribute of the upstream label is an egress label; for an upstream label and an egress port of a connection, the attribute of the upstream label is an ingress label; for a downstream label and an ingress port of a connection, the attribute of the downstream label is an ingress label; and for a downstream label and an egress port of a connection, the attribute of the downstream label is an egress label. In the present invention, the ingress port of a connection and the egress port of a connection are determined according to a requested direction of the connection.

Assume that the RCE generates a route as shown in Figures 3 and 4 for the P2P connection according to the route query information received by the RCE. Further, in (a, b) as shown in Figures 3 and 4, "a" denotes a link cost, and "b" denotes spare bandwidth of the link. Assume that the information of the connection establishment request received by the CCE includes a source bridge M0, a destination bridge M2, a downstream label (VLAN1, Dest_MAC), an upstream label (VLAN1 , Source_MAC) and a Committed Information Rate 20 of the connection. The connection route use request is sent to the RCE by the CCE, and the route information generated by the RCE is M0 to M1 to M2.

Here, the label registration use requests sent by the CCE respectively to the source bridge M0, the destination bridge M2 and an intermediate bridge M1 includes information as shown in Figure 3.

If the connection establishment request includes bandwidth information, the label registration use request sent from the CCE to the LME includes bandwidth information.

At step 3, the CCE stores the corresponding connection information including the information of the P2P connection establishment request and the P2P fully explicit route with ingress and egress ports.

A specific process of releasing a connection by the CCE upon receiving a P2P connection release request includes the following steps.

At step 1, with respect to information of each hop of a connection, the CCE sends a label registration release request to an LME controlling this hop according to the connection information stored in the CCE, where the label registration release request includes one or more registration items to be cancelled. A label and a port identifier are also included in the label registration release request.

At step 2, if the connection information stored in the CCE includes bandwidth information such as a Committed Information Rate, the CCE sends to the RCE a P2P connection route release request including a P2P fully explicit route with ingress and egress ports, the Committed Information Rate of the connection and unidirectional/bidirectional attribute.

A specific process of establishing a P2MP broadcast connection by the CCE upon receiving a P2MP broadcast connection establishment request includes the following steps.

At step 1, if the connection establishment request received by the CCE includes structure information of a tree, the process proceeds to step 2; otherwise, the CCE queries the RCE about a P2MP broadcast connection establishment request. In other words, the CCE sends to the RCE a connection route use request which mainly includes an identifier of a source bridge, identifiers of M (M>1) destination bridges. The route query information may also include bandwidth information of the connection and a bridge constraint condition.

At step 2, after obtaining the structure information of the tree, the CCE sends, for all the designated ports and the root port of the tree at each bridge on the tree, a label registration use request to an LME controlling the bridge on the tree. The label registration use request includes one or more registration items including a label, a port identifier and a label attribute. Here, the label attribute is an "egress label" for a designated port, and is an "ingress label" for the root port.

For a connection with a bandwidth demand, the label registration use request sent from the CCE to an LME includes bandwidth information.

At step 3, the CCE stores the corresponding connection information including the P2MP broadcast connection establishment request and the structure information of the tree for the connection.

A specific process of releasing a connection by the CCE upon receiving a P2MP broadcast connection release request includes the following steps.

At step 1, for the designated ports and the root port of each bridge on the tree, the CCE sends a label registration release request to an LME controlling the bridge according to structure information of a tree stored in the CCE, where the label registration release request includes one or more registration items each including a label and a port identifier.

At step 2, if the connection information stored in the CCE includes information of a Committed Information Rate, the CCE further needs to send to the RCE a P2MP broadcast connection route release request including the structure information of the tree and the Committed Information Rate of the connection.

In addition, during establishment of a P2MP broadcast connection, if the connection establishment request received by the CCE includes a multicast label, such as a VLAN identifier and a multicast MAC address, or a multicast MAC address, the CCE may reassign a VLAN identifier unique within the bridging network, and set up a mapping relationship between the VLAN identifier and the multicast label. Then, the CCE establishes a connection, with the VLAN identifier used as a connection label, and configures a mapping relationship between the VLAN identifier and the multicast label for end points of the connection. When the connection is to be released, the configured mapping relationship is required to be released. Other steps of the process of establishing or releasing are the same as those described above.

A specific process of establishing an MP2MP broadcast connection by the CCE upon receiving an MP2MP broadcast connection establishment request includes the following steps.

At step 1, if the connection establishment request received by the CCE includes structure information of a tree, the process proceeds to step 2; otherwise, the CCE queries the RCE about an MP2MP broadcast connection establishment request. In other words, the CCE sends to the RCE a connection route use request including identifiers of M (M>2) bridges. The connection route use request may also include bandwidth information of the connection, a root bridge and a bridge constraint condition.

At step 2, after obtaining the structure information of the tree, for each bridge on the tree, the CCE sends, with respect to all the designated ports and the root port, a label registration use request to an LME controlling the bridge. The label registration use request includes one or more registration items including a label, a port identifier and a label attribute. Here, for each port, there are two registration items with corresponding label attributes of "ingress label" and "egress label".

If the connection establishment request includes bandwidth information, the CCE may include bandwidth information in the label registration use request sent to the LME.

At step 3, the CCE stores the corresponding connection information including the MP2MP broadcast connection establishment request and the structure information of the tree for the connection.

A specific process of releasing a connection by the CCE upon receiving an MP2MP broadcast connection release request includes the following steps.

At step 1, for each bridge on a tree, the CCE sends a label registration release request to an LME controlling this bridge with respect to all designated ports and root ports of the tree according to structure information of the tree stored in the CCE. The label registration release request includes one or more registration items each including a label and a port identifier.

At step 2, if the connection information stored in the CCE includes bandwidth information, the CCE sends to the RCE an MP2MP broadcast connection route release request including the structure information of the tree and a Committed Information Rate of the connection.

Operations of an RCE according to an embodiment of the present invention are as follows.

1. The RCE receives link configuration information reported by each LME, or resource configuration information from the management plane, and sets up and maintains topology information of the entire bridging network. The topology information of the entire bridging network consists of bridges and links connecting the bridges. The link configuration information includes a link capacity which is also referred to as total bandwidth of a link or link bandwidth. The RCE needs to initialize available spare bandwidth of a link as the total bandwidth of the link.

2. The RCE receives and stores failure status information of a link reported by the LME. A failure status flag includes "failing" and "normal".

3. The RCE receives and stores the resource configuration information sent from the management plane. The resource configuration information includes disabling or activation of a link, and disabling or activation of a bridge node.

4. The network topology set up and maintained by the RCE is an active network topology consisting of available topology resources free of a failure. The topology resources here include bridge nodes and links.

5. The RCE receives a P2P connection based connection route use request, i.e. route query information, sent from a CCE. The P2P connection route query information mainly includes a MAC address of a source bridge and a MAC address of a destination bridge. The query information may further include bandwidth information of a link, a link direction attribute, information of an explicit route, etc. The link direction attribute is used to indicate whether the P2P connection is a bidirectional connection or a unidirectional connection. Upon receiving the route query information, the RCE performs the following steps.

At step 1, the RCE calculates a P2P fully explicit route with ingress and egress ports to fulfill the connection establishment request according to a currently active network topology. Here, if the P2P connection route query information contains a Committed Information Rate of the connection, the link selected by the RCE through the calculation must have a corresponding spare bandwidth resource available for allocation. If the P2P connection route query information contains a Peak Information Rate of the connection, the Peak Information Rate can not exceed total bandwidth of the link selected by the RCE.

At step 2, if the P2P connection route query information received by the RCE contains information of the Committed Information Rate of the connection, then for each of the links through which the connection passes, the RCE modifies spare bandwidth of the corresponding link in the network topology stored in the RCE as the original spare bandwidth of the link minus the Committed Information Rate of the connection, thereby updating the network topology.

At step 3, the RCE returns the fully explicit route information to the CCE.

The RCE generates a route as shown in Figures 3 and 4 for the P2P connection according to the route query information received by the RCE.

In (a, b) of Figures 3 and 4, "a" denotes a link cost, and "b" denotes spare bandwidth of a link. Assume that the information of the connection establishment request received by the CCE includes a source bridge M0, a destination bridge M2, a downstream label (VLAN1, Dest_MAC), an upstream label (VLAN1, Source_MAC) and a Committed Information Rate 20 of the connection. The connection route use request is sent to the RCE by the CCE, and the route information generated by the RCE is M0 to M1 to M2.

6. The RCE receives a connection route use request for a P2MP broadcast connection, i.e. route query information, sent from the CCE. The P2MP broadcast connection route query information primarily includes an identifier of a source bridge and identifiers of M (M>1) destination bridges. The P2MP broadcast connection route query information may further include bandwidth information of the connection and a bridge constraint condition. After receiving the P2MP broadcast connection route query information, the RCE calculates structure information of a tree supporting the connection according to the connection route query information. The RCE may calculate structure information of a tree supporting a P2MP broadcast connection through the following steps.

At step 1, by taking the source bridge as a root bridge, the RCE spans a tree satisfying requirements of the connection using an algorithm, such as the Edsgar Dijkstra's algorithm, through a specific process with respect to an active network topology in the bridging network. The above specific process may be as follows: if the connection route query information contains a Committed Information Rate of the connection, the link selected by the RCE must have a corresponding spare bandwidth resource available for allocation; if the connection route query information contains a Peak Information Rate of the connection, the Peak Information Rate can not exceed total bandwidth of the link selected by the RCE; and if the route query information contains a bridge constraint condition, the spanned tree calculated by the RCE must satisfy the bridge constraint condition.

At step 2, the tree spanned through the calculation at step 1 is clipped by the RCE to form a tree, of which each leaf node is an end point of the connection in the connection establishment request. A specific method for clipping the tree may be as follows: a leaf node of the tree that is not one of the M destination bridges in the information of the connection route use request is clipped off; the step 2 is repeated until no leaf node like the one described above exists on the spanned tree, in other words, each of the leaf nodes on the spanned tree is one of the M destination bridges in the connection route use request. Here, the leaf node refers to a node having no child node.

If the P2MP broadcast connection route query information received by the RCE contains information of the Committed Information Rate of the connection, then for each of the links through which the spanned tree passes, the RCE needs to modify spare bandwidth of the corresponding link in the network topology stored in the RCE as the original spare bandwidth minus the Committed Information Rate of the connection, thereby updating the network topology. The RCE returns structure information of the clipped tree to the CCE.

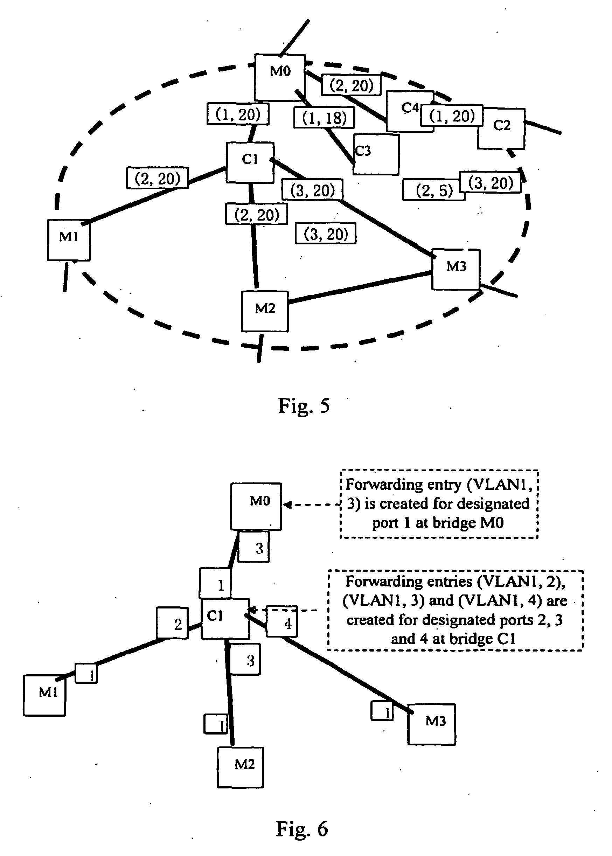

The tree spanned by the RCE according to the received route query information is shown in Figure 5.

In (a, b) of Figure 5, "a" denotes a link cost, and "b" denotes spare bandwidth of a link. Assume that the information of the connection establishment request received by the CCE includes a broadcast connection C1 with a source bridge M0 and destination bridges M1, M2 and M3, a Committed Information Rate 20 of the connection, and a broadcast connection label VLAN1.

After receiving a connection route use request sent from the CCE, the RCE firstly spans a tree including bridges M0, M1, M2, M3, C1, C2, C3 and C4 using a traditional algorithm such as the Edsgar Dijkstra's algorithm taking into account bandwidth information of the connection, where M0 is a root bridge. The structure of the tree is indicated by the bold solid lines in Figure 5.

Then, the RCE clips the tree so that useless bridges that do not serve the connection are clipped off, thereby obtaining a tree with M0 as the root. The structure of the clipped tree is as shown in Figure 6. The RCE returns the structure information of the clipped tree as shown in Figure 6 to the CCE. The CCE sends a label registration use request to an LME for each bridge on the tree with respect to a designated port, and the LME creates a path forwarding entry for VLAN1.

7. The RCE receives a connection route use request for an MP2MP broadcast connection, i.e. route query information, sent from the CCE. The MP2MP broadcast connection route query information primarily includes information of MAC addresses of M (M>2) bridges. The route query information may further include bandwidth information of the connection, a root bridge and a root constraint condition. After receiving the route query information, the RCE calculates structure information of a tree supporting the MP2MP broadcast connection through the following steps.

At step 1, if the route query information received by the RCE includes information of a root bridge, the process proceeds to step 2; otherwise, the RCE may take a bridge as the root bridge according to a predetermined policy, for example, take a bridge with the minimum ID as the root bridge according to the value of the bridge ID.

At step 2, based on an active network topology in the bridging network, the RCE spans a tree satisfying requirements of the connection using the Edsgar Dijkstra's algorithm through a specific process according to the determined root bridge. The above specific process may be as follows: if the connection route query information contains a Committed Information Rate of the connection, the link selected by the RCE must have a corresponding spare bandwidth resource available for allocation; if the connection route query information contains a Peak Information Rate of the connection, the Peak Information Rate can not exceed total bandwidth of the link selected by the RCE; and if the route query information contains a bridge constraint condition, the spanned tree calculated by the RCE must satisfy the bridge constraint condition.

At step 3, when no tree satisfying the requirements of the connection is calculated through the above step 2, if the route query information received by the RCE includes no information of a root bridge, the RCE may select again a bridge which is not used in the above steps as the root bridge, and then the process of tree spanning at step 2 is repeated. If the route query information received by the RCE includes information of a root bridge, or if no tree satisfying the requirements of the connection may be calculated by the RCE with all the bridges in the route query information taken as the root bridge in succession, the process of calculating a tree for this route query information ends, and the following steps will not be performed any more. At this time, the process of configuring forward path information by the control system for the connection establishment request ends. If a tree satisfying the requirements of the connection is calculated through the above step 2, the process proceeds with the following steps.

At step 4, the tree calculated at step 2 is clipped to form a tree, of which each leaf node is an end point of the connection in the connection establishment request. A specific method for clipping the tree may be as follows: a leaf node of the tree that is not one of M destination bridges included in the connection route use request is clipped off; and the clipping is repeated until no leaf node like the one described above exists on the spanned tree. If no root node is designated in the connection route use request, then if the root node of the spanned tree is not one of the M bridges designated in the information of the connection route use request, and this root node has only one child node which also has only one child node, this root node is clipped, and the child node of the original root node becomes a new root bridge of the spanned tree. The above process of clipping a root node is repeated until no such a root node exists on the spanned tree.

If the MP2MP broadcast connection route query information received by the RCE contains information of the Committed Information Rate of the connection, then for each of the links through which the spanned tree passes, the RCE needs to modify spare bandwidth of the corresponding link in the network topology stored in the RCE as the original spare bandwidth of the link minus the Committed Information Rate of the connection, thereby updating the network topology. The RCE returns structure information of the clipped tree to the CCE.

8. When the RCE receives a P2P, P2MP broadcast or MP2MP connection route release request, according to a P2P fully explicit route with ingress and egress ports, or structure information of a tree, a unidirectional or bidirectional attribute, information of a Committed Information Rate of the connection in the connection route release request, for a link between neighboring bridges through which the connection passes, the RCE modifies spare bandwidth of the corresponding link in the network topology stored in the RCE as the original spare bandwidth plus the corresponding spare bandwidth capacity, thereby updating the network topology.

Because there may be considerably many P2P connections in a network, in order to enable a better expansibility in terms of the scale of connections in a bridging network, i.e., not to overload a CCE, the CCE is further divided, in the operations for a P2P connection in the above solutions, into a centralized CCE and a plurality of distributed CCEs. In other words, the CCE is of a parent-child structure. The centralized CCE is the parent CCE and may be arranged in a server. The plurality of distributed CCEs are the child CCEs, and the number of the child CCEs should correspond to the number of bridges in the bridging network. Each of the child CCEs corresponds to a bridge, and may be embedded into the bridge device, or alternatively, stand alone with the bridge device.

With this technical solution, an LME exchanges information directly with a distributed control entity CCE (i.e. a child CCE), the RCE and the management system or other upper layer applications exchange information with only the centralized CCE (i.e. the parent CCE), connection failure status of a data system is reported to the parent CCE only, and the parent control entity CCE exchanges information with the child control entity CCE. Except for the above, the way of exchanging other information is the same as that described in the above embodiments. Further, the operations of the RCE and the LMEs per se are the same as those described in the above embodiments.

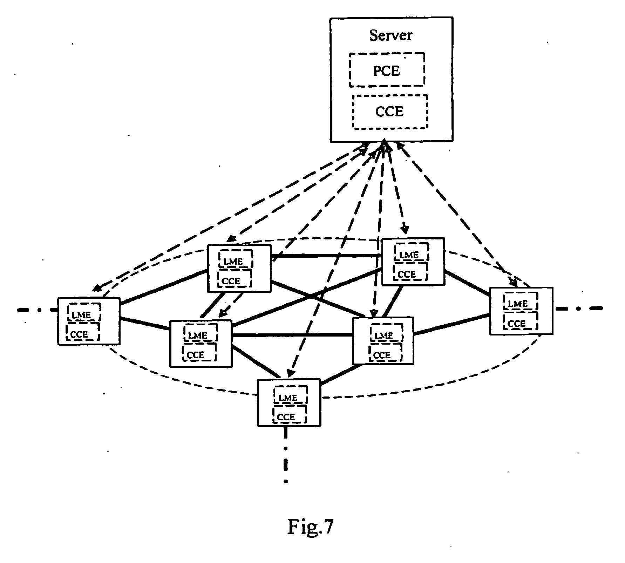

In the case where a CCE is divided into a parent CCE and child CCEs, a control system according to an embodiment of the present invention is as shown in Figure 7.

In Figure 7, the control system includes control entities and bridge devices. The RCE and parent CCE is arranged in a separate server, while the LMEs and child CCEs are embedded into the bridge devices. Signaling channels are provided between the server and the bridges. The signaling channels are indicated by the dashed lines between the server and the bridges in Figure 7, links connecting the bridges in the bridging network are indicated by the bold solid lines in Figure 7, and external links connecting devices external to the bridging network are indicated by the dash-dot lines in Figure 7.

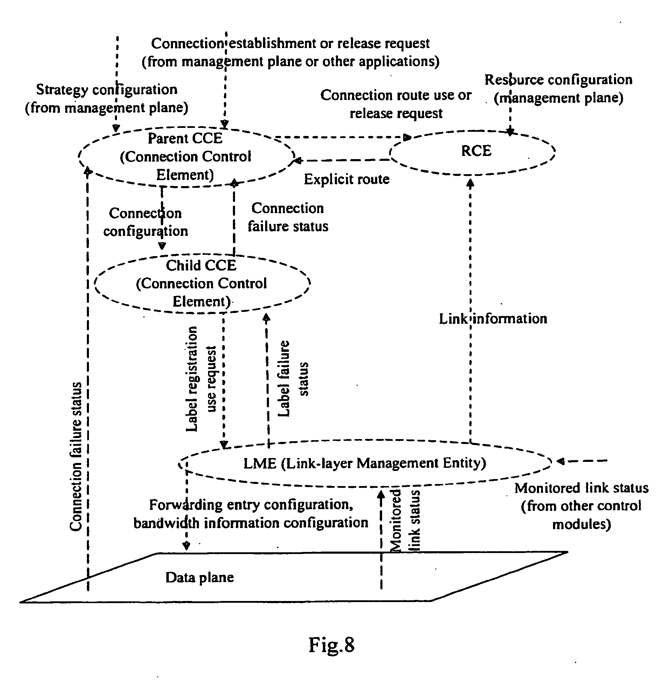

Information exchange among control entities of a control system, between the control system and a management system, and between the control system and a data system according to the present invention is illustrated in Figure 8. The above information exchange primarily includes: information relating to a connection route is exchanged between the parent CCE and the RCE; information relating to a connection label is exchanged between a child CCE and an LME, for example, the LME receives a link status monitoring report from the data system, and reports information of an affected label, i.e. a label affected by a link failure, to the child CCE according to the link status, and upon receiving the failure information of the label, the child CCE analyzes the affected connection, and further reports the failure status information of the connection to the parent CCE; and the data system may monitor an established connection directly, for example, the data system may configure a connection to be monitored on an OAM functional block of the data system through the management system, and reports the failure status information of the connection to the parent CCE, and after receiving the failure status information of the connection, the parent CCE maintains and manages the connection according to the failure status, for example, the parent CCE recovers a failing connection through a reroute mechanism, and reports alarm information for the connection to the management system. Because each of the bridges corresponds to a separate LME and child CCE, a control system should include a plurality of LMEs and a plurality of CCEs. For the sake of simplicity, only one LME and one CCE are shown in Figure 7.

According to an embodiment of the present invention, a process of establishing a connection after the parent CCE receives a P2P connection establishment request primarily includes the following steps.

At step 1, if the P2P connection establishment request received by the parent CCE contains information of a P2P fully explicit route with ingress and egress ports, the process proceeds to step 2; otherwise, the parent CCE queries the RCE about a fully explicit route from. In other words, the parent CCE sends to the RCE a connection route use request which contains connection route query information primarily including a MAC address of a source bridge and a MAC address of a destination bridge. The connection route query information may further include bandwidth information of the connection, a direction attribute of the connection, i.e. information of a bidirectional or unidirectional connection, information of the explicit route, etc.

At step 2, upon obtaining the information of the P2P fully explicit route with ingress and egress ports, the parent CCE acquires information of each of hops from the fully explicit route, and sends, according to the information of each hop, a connection configuration request to a child CCE controlling this hop. Information of the connection configuration request contains the information of the current hop of the P2P fully explicit route in addition to the original connection establishment request. The parent CCE should send the information of the P2P fully explicit route to at least one child CCE connecting a hop in the connection, such as to the child CCE corresponding to the source bridge. If the route information contains bandwidth information, i.e., the connection has a demand on bandwidth, the connection configuration request sent from the parent CCE to the child CCE contains the bandwidth information. The parent CCE may store only the information of the connection establishment request as received. It will be appreciated that the parent CCE may also store by itself the information of the P2P fully explicit route of the connection.

At step 3, upon receiving the connection configuration request, the child CCE sends, according to information of the connection configuration request, to the LME a label registration use request. Information of the label registration use request includes a downstream label, an egress port identifier, an upstream label and an ingress port identifier. If the connection configuration request received by the child CCE contains bandwidth information, the label registration use request sent from the child CCE to the LME also includes bandwidth information.

At step 4, the child CCE stores the corresponding connection information.

A specific process of releasing a connection after the parent CCE receives a P2P connection release request includes the following steps.

At step 1, the parent CCE acquires route information of the connection from the CCEs, and sends, with respect to information of each of hops of the connection, a release connection configuration request to a child CCE controlling this hop.

At step 2, upon receiving the release connection configuration request, the child CCE sends to an LME controlling the same hop as this child CCE a label registration release request. Information of the label registration release request includes a downstream label, an egress port identifier, an upstream label and an ingress port. If information of the registration use request sent originally from the parent CCE contains bandwidth information, the label registration release request also includes bandwidth information.

When the CCE employs a parent CCE and a plurality of child CCEs, the principle of the control system according to the present invention is same as that when the CCE employs only one control entity, and will not be described in detail herein. In the embodiments of the present invention, an approach of combining a centralized CCE and distributed CCEs is used, and route information such as information of a fully explicit route of a P2P connection is stored in the distributed CCEs, thereby enabling expansibility of the scale of point-to-point connections.

Although the present invention has been illustrated with reference to some embodiments, many variations and modifications which readily occur to those skilled in the art without departing from the disclosure of the present invention shall be encompassed in the scope of the present invention.

## Claims

1. A control system in an Ethernet network, comprising a link management entity, a route control entity and a connection control element, wherein,
the route control entity is adapted to acquire link information of the Ethernet network which is obtained through a layer 2 control protocol of the Ethernet network, set up and maintain a network topology of the Ethernet network according to the link information in a centralized way, and calculate a route between end bridges for a connection establishment request received by the control system according to the network topology;
the link management entity which corresponds to a bridge, is adapted to detect and output link information between a bridge corresponding to the link management entity and a neighboring bridge to a route control entity according to a layer 2 control protocol of an Ethernet network, and configure forward path information of a data system of the bridge corresponding to the link management entity according to information of a label registration use request or label registration release request sent from a connection control element, and
the connection control element is adapted to acquire, upon receiving a connection establishment request, route information of a connection needed to be established from the route control entity, and send a label registration use request or label registration release request to each of link management entities corresponding to the bridges through which the route passes.

2. The control system according to claim 1, wherein the route control entity includes a network topology maintaining module and a route calculating module, wherein
the network topology maintaining module is adapted to set up and maintain information of the network topology of the Ethernet network according to the received link information from the link management entities, and modify the information of the network, topology according to the route information of the connection needed to be established or released; and
the route calculating module is adapted to calculate and output the route information of the connection needed to be established to the connection control element according to the information of the network topology.

3. The control system according to claim 1, wherein the connection control element is of a centralized structure or a parent-child structure;
if being of the centralized structure, the connection control element controls the connection of a plurality of bridges in the bridging network, and the connection control element employing the centralized structure is a centralized control entity;
if being of the parent-child structure, the connection control element includes a parent connection control element and child connection control elements, the number of which corresponds to the number of the bridges;
the parent connection control element is a centralized control entity, and upon receiving a connection establishment request or connection release request, the parent connection control element acquires the route information of the connection needed to be established or released, and sends connection configuration information to each of the child connection control elements corresponding to the bridges through which the route passes; and
the child connection control elements employ a way of distributed control, and are distributed control entities, each of the child connection control elements controls a single bridge corresponding to the child connection control element, and each of the child connection control elements sends a label registration use request or label registration releasing request to a link management entity corresponding to the child connection control element according to the connection configuration information sent from the parent connection control element.

4. The control system according to claim 1, wherein the route control entity and the connection control element are centralized control entities, and a signaling channel employing layer 2 switching configuration is provided between the centralized control entity and the link management entity and is adapted to exchange information between the centralized control entity and the link management entity.

5. A method for transporting a data packet in an Ethernet network, comprising the steps of:
detecting and outputting, by a link management entity, link information between a bridge corresponding to the link management entity and a neighboring bridge to a route control entity according to a layer 2 control protocol of an Ethernet network;
acquiring, according to a layer 2 control protocol of the Ethernet network, by a route control entity, link information of the Ethernet network, and setting up and maintaining a network topology of the Ethernet network according to the link information in a centralized way;
calculating, according to the network topology, by the route control entity, a route between end bridges of a connection for a connection establishment request received by the control system,
acquiring, by a connection control element, upon receiving a connection establishment request, the route of a connection needed to be established from the route control entity, and sending a label registration use request or label registration release request to each of the link management entities corresponding to the bridges through which the route passes;
configuring, by the link management entity, forward path information of a data system of each bridge through which the connection passes according to information of the label registration use request or label registration release request sent from the connection control element; and
forwarding a data packet by the data system of each bridge according to the forward path information.

6. The method according to claim 5, wherein the step of acquiring link information of the Ethernet network, by a route control entity, and setting up and maintaining a network topology of the Ethernet network according to the link information in a centralized way includes:
when detecting a link between a bridge and an neighboring bridge, or detecting a change in status information of a link, reporting, by the link management entity, the link information according to the layer 2 control protocol of the Ethernet network; and
setting up and maintaining the network topology of the Ethernet network according to the link information reported by the link management entity, and/or resource configuration information configured and sent from a management plane.

7. The method according to claim 6, wherein the link information includes configuration information of the detected link, link failure information, and link failure removal information; and
when receiving the configuration information of the detected link, the route control entity adds the link into the network topology; when receiving the link failure information, the route control entity sets status of the corresponding link to failing status; and when receiving the link failure removal information, the route control entity sets the status of the corresponding link to normal status.

8. The method according to claim 6, wherein the step of sending a label registration use request or label registration release request to each of the link management entities, and configuring, by the link management entity, forward path information of a data system of each bridge through which the connection passes includes:
sending according to route information in the connection establishment request, by a connection control element, a label registration use request to the link management entity corresponding to each bridge indicated in the route information; and
configuring according to the received label registration use request, by the link management entity, the forward path information in the data system of the bridge corresponding to the link management entity.

9. The method according to claim 5, wherein the step of calculating according to the network topology, by the route control entity, a route between end bridges of a connection for a connection establishment request received by the control system, sending a label registration use request or label registration release request to each of the link management entities and configuring, by the link management entity, forward path information of a data system of each bridge through which the connection passes includes:
receiving, by a connection control element, the connection establishment request, and sending information of a connection route use request to the route control entity;
calculating according to the network topology, by the route control entity, a route between end bridges of a connection for the received connection route use request, and returning the calculated route information to the connection control element;
sending according to the received route information, by the connection control element, a label registration use request to the link management entity corresponding to each bridge through which the connection passes; and
configuring according to the received label registration use request, by the link management entity, the forward path information in the data system of the bridge corresponding to the link management entity.

10. The method according to claim 9, wherein the connection establishment request is a point-to-point connection establishment request, and the information of the connection route use request includes a MAC address of a source bridge and a MAC address of a destination bridge; or, the information of the connection route use request includes bandwidth information and/or a connection direction attribute, in addition to a MAC address of a source bridge and a MAC address of a destination bridge;
the step of calculating according to the network topology, by the route control entity, a route between end bridges of a connection for the received connection route use request, and returning the calculated route information to the connection control element includes:
calculating according to a currently active network topology, by the route control entity, a point-to-point fully explicit route with ingress and egress ports for the received connection route use request, and returning the route information to the connection control element; and
if the bandwidth information is included in the connection route use request, updating the network topology by the route control entity according to the bandwidth information and the calculated point-to-point fully explicit route.

11. The method according to claim 9, wherein the connection establishment request is a point-to-multipoint broadcast connection establishment request, and the information of the connection route use request includes a MAC address of one source bridge and MAC addresses of a plurality of destination bridges; or
the information of the connection route use request includes bandwidth information and/or a bridge constraint condition, in addition to a MAC address of one source bridge and MAC addresses of a plurality of destination bridges;
the step of calculating according to the network topology, by the route control entity, a route between end bridges of a connection for the received connection route use request, and returning the calculated route information to the connection control element includes:
calculating, with the source bridge as a root bridge, by the route control entity, a spanned tree for the received connection route use request according to a currently active network topology, and clipping off leaves of the tree which are not destination addresses;
returning, by the route control entity, structure information of the clipped tree as route information to the connection control element; and
if the bandwidth information is included in the connection route use request, updating the network topology by the route control entity according to the bandwidth information and the structure information of the tree.

12. The method according to claim 9, wherein the connection establishment request is a multipoint-to-multipoint broadcast connection establishment request, and the information of the connection route use request includes MAC addresses of a plurality of bridges; or,
the information of the connection route use request includes bandwidth information, and/or root bridge information, and/or a bridge constraint condition, in addition to MAC addresses of a plurality of bridges;
the step of calculating according to the network topology, by the route control entity, a route between end bridges of a connection for the received connection route use request, and returning the calculated route information to the connection control element includes:
acquiring, by the route control entity, the root bridge information in the connection route use request; or, if no root bridge information exists in the connection route use request, determining a root bridge by the route control entity according to a predetermined strategy;
calculating according to a currently active network topology and the root bridge, by the route control entity, a spanned tree for the received connection route use request, and clipping the spanned tree, so that each leaf of the clipped spanned tree is a bridge in the connection route use request;
returning, by the route control entity, structure information of the clipped tree as route information to the connection control element; and
if information of a committed information rate is included in the connection route use request, updating the network topology by the route control entity according to the bandwidth information and the structure information of the tree.

13. The method according to claim 9, further comprising:
if bandwidth information is included in the connection establishment request, sending, by the connection control element, the bandwidth information to the link management entity; and
when determining that the bandwidth information is included in the received route information, sending, by the link management entity, the bandwidth information to a data system, and reserving a resource according to the bandwidth information and performing traffic control by the data system.

14. The method according to claim 5, further comprising:
receiving, by a connection control element, a connection release request, acquiring route information corresponding to the connection release request, and sending a label registration release request to a link management entity corresponding to each bridge through which the connection passes, according to the route information; and
removing according to the received label registration release request, by the link management entity, corresponding forward path information in a data system of a bridge corresponding the link management entity.

15. The method according to claim. 14, wherein
the connection control element acquires the route information corresponding to the connection needed to be released from route information stored in the connection control element itself; and
if the connection control element is of a parent-child structure, a parent connection control element in the connection control element acquires the route information corresponding to the connection needed to be released according to route information stored in the parent connection control element itself or route information stored in a child connection control element.

16. The method according to any one of claims 5 to 15, wherein if the connection is a point-to-point connection, the connection establishment request includes a MAC address of one source bridge, a MAC address of one destination bridge and label information identifying the connection; and the label information includes an upstream VLAN identifier and/or a MAC address of an upstream destination bridge; or, the label information includes an upstream VLAN identifier and/or a MAC address of a destination bridge, and a downstream VLAN identifier and/or a MAC address of a destination bridge;
if the connection is a point-to-multipoint connection, the connection establishment request includes an MAC address of one source bridge, MAC addresses of a plurality of destination bridges and label information identifying the connection; and the label information includes a VLAN identifier and/or a multicast MAC address; and
if the connection is a multipoint-to-multipoint connection, the connection establishment request includes a plurality of bridges and label information identifying the connection; and the label information includes a VLAN identifier and/or a multicast MAC address.

17. The method according to any one of claims 5 to 15, further comprising:
maintaining, by a connection control element, a connection affected by a failure, according to connection failure status information received from a data system or label failure status information received from a link management entity; and
if the connection control element is of a parent-child structure, maintaining, by a parent connection control element, the connection affected by the failure, according to the connection failure status information received from the data system or the label failure status information received from the link management entity.

18. The method according to any one of claims 5 to 15, wherein if the connection control element is of a parent-child structure,
information is exchanged between a parent connection control element and the route control entity, and connection configuration information is exchanged between the parent connection control element and a child connection control element, or the connection configuration information and connection failure status information arc exchanged between the parent connection control element and the child connection control element;
according to the connection failure status information, the parent connection control element maintains a connection affected by a failure; and
according to the received connection configuration information, the child connection control element sends a label registration use request or label registration release request to a link management entity corresponding to the child connection control element.

## Patentansprüche

1. Steuersystem in einem Ethernet-Netz, das eine Verbindungsmanagementeinheit, eine Wegsteuereinheit und ein Verbindungssteuerelement umfasst, wobei
die Wegsteuereinheit ausgelegt ist, Verbindungsinformationen des Ethernet-Netzes zu erfassen, die durch ein Schicht-2-Steuerprotokoll des Ethernet-Netzes erhalten werden, eine Netztopologie des Ethernet-Netzes gemäß den Verbindungsinformationen auf eine zentralisierte Art aufzubauen und aufrechtzuerhalten und einen Weg zwischen Endbrücken für eine durch das Steuersystem empfangene Verbindungsherstellungsanforderung gemäß der Netztopologie zu berechnen;
die Verbindungsmanagementeinheit, die einer Brücke entspricht, ausgelegt ist, Verbindungsinformationen zwischen einer Brücke, die der Verbindungsmanagementeinheit entspricht, und einer benachbarten Brücke zu detektieren und zu einer Wegsteuereinheit gemäß einem Schicht-2-Steuerprotokoll eines Ethernet-Netzes auszugeben und Weiterleitungsweginformationen eines Datensystems der Brücke, die der Verbindungsmanagementeinheit entspricht, gemäß Informationen einer von einem Verbindungssteuerelement gesendeten Kennungsregistrierungs-Benutzungsanforderung oder einer von einem Verbindungssteuerelement gesendeten Kennungsregistrierungs-Freigabeanforderung zu konfigurieren; und
das Verbindungssteuerelement ausgelegt ist, beim Empfangen einer Verbindungsherstellungsanforderung Weginformationen einer Verbindung, die von der Wegsteuereinheit hergestellt werden muss, zu erfassen und eine Kennungsregistrierungs-Benutzungsanforderung oder eine Kennungsregistrierungs-Freigabeanforderung an jede der Verbindungsmanagementeinheiten zu senden, die den Brücken entsprechen, über die der Weg führt.

2. Steuersystem nach Anspruch 1, wobei die Wegsteuereinheit ein Netztopologie-Aufrechterhaltungsmodul und ein Wegberechnungsmodul enthält, wobei
das Netztopologie-Aufrechterhaltungsmodul ausgelegt ist, Informationen über die Netztopologie des Ethernet-Netzes gemäß den von den Verbindungsmanagementeinheiten empfangenen Verbindungsinformationen aufzubauen und aufrechtzuerhalten und die Informationen über die Netztopologie gemäß den Weginformationen der Verbindung, die hergestellt oder freigegeben werden muss, zu modifizieren; und
das Wegberechnungsmodul ausgelegt ist, die Weginformationen der Verbindung, die hergestellt werden muss, gemäß den Informationen über die Netztopologie zu berechnen und an das Verbindungssteuerelement auszugeben.

3. Steuersystem nach Anspruch 1, wobei das Verbindungssteuerelement eine zentralisierte Struktur oder eine Vorgänger-Nachfolger-Struktur aufweist;
wobei, falls es die zentralisierte Struktur aufweist, das Verbindungssteuerelement die Verbindung einer Vielzahl von Brücken im Brückenbildungs-Netz steuert und das Verbindungssteuerelement, das die zentralisierte Struktur verwendet, eine zentralisierte Steuereinheit ist;
wobei, falls es die Vorgänger-Nachfolger-Struktur aufweist, das Verbindungssteuerelement ein Vorgänger-Verbindungssteuerelement und Nachfolger-Verbindungssteuerelemente, deren Anzahl der Anzahl der Brücken entspricht, enthält;
das Vorgänger-Verbindungssteuerelement eine zentralisierte Steuereinheit ist, wobei beim Empfangen einer Verbindungsherstellungsanforderung oder einer Verbindungsfreigabeanforderung das Vorgänger-Verbindungssteuerelement die Weginformationen der Verbindung, die hergestellt oder freigegeben werden muss, erfasst und die Verbindungskonfigurationsinformationen an jedes der Nachfolger-Verbindungssteuerelemente, die den Brücken entsprechen, über die der Weg führt, sendet; und
die Nachfolger-Verbindungssteuerelemente eine Art der verteilten Steuerung verwenden und verteilte Steuereinheiten sind, jedes der Nachfolger-Verbindungssteuerelemente eine einzelne Brücke, die dem Nachfolger-Verbindungssteuerelement entspricht, steuert und jedes der Nachfolger-Verbindungssteuerelemente eine Kennungsregistrierungs-Benutzungsanforderung oder eine Kennungsregistrierungs-Freigabeanforderung gemäß den vom Vorgänger-Verbindungssteuerelement gesendeten Verbindungskonfigurationsinformationen an eine Verbindungsmanagementeinheit, die dem Nachfolger-Verbindungssteuerelement entspricht, sendet.

4. Steuersystem nach Anspruch 1, wobei die Wegsteuereinheit und das Verbindungssteuerelement zentralisierte Steuereinheiten sind und ein Signalisierungskanal, der eine Schicht-2-Vermittlungskonfiguration verwendet, zwischen der zentralisierten Steuereinheit und der Verbindungsmanagementeinheit vorgesehen ist und ausgelegt ist, Informationen zwischen der zentralisierten Steuereinheit und der Verbindungsmanagementeinheit auszutauschen.

5. Verfahren zum Transportieren eines Datenpakets in einem Ethernet-Netz, das die Schritte umfasst:
Detektieren und Ausgeben von Verbindungsinformationen durch eine Verbindungsmanagementeinheit zwischen einer Brücke, die der Verbindungsmanagementeinheit entspricht, und einer benachbarten Brücke an eine Wegsteuereinheit, gemäß einem Schicht-2-Steuerprotokoll eines Ethernet-Netzes;
Erfassen von Verbindungsinformationen des Ethernet-Netzes durch eine Wegsteuereinheit, gemäß einem Schicht-2-Steuerprotokoll des Ethemet-Netzes, und Aufbauen und Aufrechterhalten einer Netztopologie des Ethernet-Netzes gemäß den Verbindungsinformationen auf eine zentralisierte Art;
Berechnen eines Weges durch die Wegsteuereinheit zwischen Endbrücken einer Verbindung für eine durch das Steuersystem empfangene Verbindungsherstellungsanforderung, gemäß der Netztopologie,
Erfassen des Weges einer Verbindung, die von der Wegsteuereinheit hergestellt werden muss, durch ein Verbindungssteuerelement beim Empfangen einer Verbindungsherstellungsanforderung und Senden einer Kennungsregistrierungs-Benutzungsanforderung oder einer Kennungsregistrierungs-Freigabeanforderung an jede der Verbindungsmanagementeinheiten, die den Brücken entsprechen, über die der Weg führt;
Konfigurieren von Weiterleitungsweginformationen eines Datensystems jeder Brücke, über die die Verbindung führt, durch die Verbindungsmanagementeinheit, gemäß Informationen der vom Verbindungssteuerelement gesendeten Kennungsregistrierungs-Benutzungsanforderung oder der vom Verbindungssteuerelement gesendeten Kennungsregistrierungs-Freigabeanforderung; und
Weiterleiten eines Datenpakets durch das Datensystem jeder Brücke gemäß den Weiterleitungsweginformationen.

6. Verfahren nach Anspruch 5, wobei der Schritt des Erfassens von Verbindungsinformationen des Ethernet-Netzes durch eine Wegsteuereinheit und des Aufbauens und Aufrechterhaltens einer Netztopologie des Ethernet-Netzes gemäß den Verbindungsinformationen auf eine zentralisierte Art enthält:
Melden der Verbindungsinformationen gemäß dem Schicht-2-Steuerprotokoll des Ethernet-Netzes durch die Verbindungsmanagementeinheit, wenn eine Verbindung zwischen einer Brücke und einer benachbarten Brücke detektiert wurde oder wenn eine Änderung von Zustandsinformationen einer Verbindung detektiert wurde; und Aufbauen und Aufrechterhalten der Netztopologie des Ethernet-Netzes gemäß den durch die Verbindungsmanagementeinheit gemeldeten Verbindungsinformationen und/oder von einer Managementebene konfigurierten und gesendeten Betriebsmittelkonfigurationsinformationen.

7. Verfahren nach Anspruch 6, wobei die Verbindungsinformationen die Konfigurationsinformationen der detektierten Verbindung, Verbindungsausfallinformationen und Verbindungsausfallbeseitigungsinformationen enthalten; und
die Wegsteuereinheit die Verbindung zur Netztopologie hinzufügt, wenn sie die Konfigurationsinformationen der detektierten Verbindung empfängt; die Wegsteuereinheit den Zustand der entsprechenden Verbindung auf einen Ausfallzustand setzt, wenn sie die Verbindungsausfallinformationen empfängt; und die Wegsteuereinheit den Zustand der entsprechenden Verbindung auf den Normalzustand setzt, wenn sie die Verbindungsausfallbeseitigungsinformationen empfängt.

8. Verfahren nach Anspruch 6, wobei der Schritt des Sendens einer Kennungsregistrierungs-Benutzungsanforderung oder einer Kennungsregistrierungs-Freigabeanforderung an jede der Verbindungsmanagementeinheiten und des Konfigurierens von Weiterleitungsweginformationen eines Datensystems jeder Brücke, über die die Verbindung führt, durch die Verbindungsmanagementeinheit enthält:
Senden einer Kennungsregistrierungs-Benutzungsanforderung an die Verbindungsmanagementeinheit, die jeder Brücke entspricht, die in den Weginformationen angegeben ist, durch ein Verbindungssteuerelement, gemäß Weginformationen in der Verbindungsherstellungsanforderung; und
Konfigurieren der Weiterleitungsweginformationen im Datensystem der Brücke, die der Verbindungsmanagementeinheit entspricht, durch die Verbindungsmanagementeinheit, gemäß der empfangenen Kennungsregistrierungs-Benutzungsanforderung.

9. Verfahren nach Anspruch 5, wobei der Schritt des Berechnens eines Weges durch die Wegsteuereinheit, gemäß der Netztopologie, zwischen den Endbrücken einer Verbindung für eine durch das Steuersystem empfangene Verbindungsherstellungsanforderung, des Sendens einer Kennungsregistrierungs-Benutzungsanforderung oder einer Kennungsregistrierungs-Freigabeanforderung an jede der Verbindungsmanagementeinheiten und des Konfigurierens von Weiterleitungsweginformationen eines Datensystems jeder Brücke, über die die Verbindung führt, durch die Verbindungsmanagementeinheit enthält:
Empfangen der Verbindungsherstellungsanforderung durch ein Verbindungssteuerelement und Senden von Informationen einer Verbindungsweg-Benutzungsanforderung an die Wegsteuereinheit;
Berechnen eines Weges zwischen Endbrücken einer Verbindung für die empfangene Verbindungsweg-Benutzungsanforderung durch die Wegsteuereinheit, gemäß der Netztopologie, und Zurückschicken der berechneten Weginformationen an das Verbindungssteuerelement;
Senden einer Kennungsregistrierungs-Benutzungsanforderung an die Verbindungsmanagementeinheit, die jeder Brücke entspricht, über die die Verbindung führt, durch das Verbindungssteuerelement, gemäß den empfangenen Weginformationen; und
Konfigurieren der Weiterleitungsweginformationen im Datensystem der Brücke, die der Verbindungsmanagementeinheit entspricht, durch die Verbindungsmanagementeinheit, gemäß der empfangenen Kennungsregistrierungs-Benutzungsanforderung.

10. Verfahren nach Anspruch 9, wobei die Verbindungsherstellungsanforderung eine Punkt-zu-Punkt-Verbindungsherstellungsanforderung ist und die Informationen der Verbindungsweg-Benutzungsanforderung eine MAC-Adresse einer Quellbrücke und eine MAC-Adresse einer Zielbrücke enthalten; oder die Informationen der Verbindungsweg-Benutzungsanforderung zusätzlich zu einer MAC-Adresse einer Quellbrücke und einer MAC-Adresse einer Zielbrücke Bandbreiteninformationen und/oder ein Verbindungsrichtungsattribut enthalten;
wobei der Schritt des Berechnens eines Weges durch die Wegsteuereinheit, gemäß der Netztopologie, zwischen Endbrücken einer Verbindung für die empfangene Verbindungsweg-Benutzungsanforderung und des Zurückschickens der berechneten Weginformationen an das Verbindungssteuerelement enthält:
Berechnen eines vollständig expliziten Punkt-zu-Punkt-Weges mit Eintritts- und Austritts-Ports für die empfangene Verbindungsweg-Benutzungsanforderung durch die Wegsteuereinheit, gemäß einer momentan aktiven Netztopologie, und Zurückschicken der Weginformationen an das Verbindungssteuerelement; und
falls die Bandbreiteninformationen in der Verbindungsweg-Benutzungsanforderung enthalten sind, Aktualisieren der Netztopologie durch die Wegsteuereinheit gemäß den Bandbreiteninformationen und dem berechneten, vollständig expliziten Punkt-zu-Punkt-Weg.

11. Verfahren nach Anspruch 9, wobei die Verbindungsherstellungsanforderung eine Punkt-zu-Mehrpunkt-Broadcast-Verbindungsherstellungsanforderung ist und die Informationen der Verbindungsweg-Benutzungsanforderung eine MAC-Adresse einer Quellbrücke und MAC-Adressen einer Vielzahl von Zielbrücken enthalten; oder
die Informationen der Verbindungsweg-Benutzungsanforderung zusätzlich zu einer MAC-Adresse einer Quellbrücke und MAC-Adressen einer Vielzahl von Zielbrücken Bandbreiteninformationen und/oder eine Brücken-Einschränkungsbedingung enthalten;
wobei der Schritt des Berechnens eines Weges durch die Wegsteuereinheit, gemäß der Netztopologie, zwischen Endbrücken einer Verbindung für die empfangene Verbindungsweg-Benutzungsanforderung und des Zurückschickens der berechneten Weginformationen an das Verbindungssteuerelement enthält:
Berechnen eines aufgespannten Baums für die empfangene Verbindungsweg-Benutzungsanforderung, mit der Quellbrücke als eine Wurzelbrücke, durch die Wegsteuereinheit, gemäß einer momentan aktiven Netztopologie, und Ausschneiden von Blättern des Baumes, die keine Zieladressen sind;
Zurückschicken von Strukturinformationen des ausgeschnittenen Baums als Weginformationen an das Verbindungssteuerelement durch die Wegsteuereinheit; und
falls die Bandbreiteninformationen in der Verbindungsweg-Benutzungsanforderung enthalten sind, Aktualisieren der Netztopologie durch die Wegsteuereinheit gemäß den Bandbreiteninformationen und den Strukturinformationen über den Baum.

12. Verfahren nach Anspruch 9, wobei die Verbindungsherstellungsanforderung eine Mehrpunkt-zu-Mehrpunkt-*Broadcast*-Verbindungsherstellungsanforderung ist und die Informationen der Verbindungsweg-Benutzungsanforderung MAC-Adressen einer Vielzahl von Brücken enthalten; oder
die Informationen der Verbindungsweg-Benutzungsanforderung zusätzlich zu MAC-Adressen einer Vielzahl von Brücken Bandbreiteninformationen und/oder Wurzelbrückeninformationen und/oder eine Brücken-Einschränkungsbedingung enthalten;
wobei der Schritt des Berechnens eines Weges durch die Wegsteuereinheit, gemäß der Netztopologie, zwischen Endbrücken einer Verbindung für die empfangene Verbindungsweg-Benutzungsanforderung und des Zurückschickens der berechneten Weginformationen an das Verbindungssteuerelement enthält:
Erfassen der Wurzelbrückeninformationen in der Verbindungsweg-Benutzungsanforderung durch die Wegsteuereinheit; oder, falls in der Verbindungsweg-Benutzungsanforderung keine Wurzelbrückeninformationen vorhanden sind, Bestimmen einer Wurzelbrücke durch die Wegsteuereinheit gemäß einer vorgegebenen Strategie;
Berechnen eines aufgespannten Baums für die empfangene Verbindungsweg-Benutzungsanforderung durch die Wegsteuereinheit gemäß einer momentan aktiven Netztopologie und der Wurzelbrücke, und Ausschneiden des aufgespannten Baums, so dass jedes Blatt des ausgeschnittenen, aufgespannten Baums eine Brücke in der Verbindungsweg-Benutzungsanforderung ist;
Zurückschicken von Strukturinformationen des ausgeschnittenen Baums als Weginformationen an das Verbindungssteuerelement durch die Wegsteuereinheit; und
falls Informationen über eine festgeschriebene Informationsrate in der Verbindungsweg-Benutzungsanforderung enthalten sind, Aktualisieren der Netztopologie gemäß den Bandbreiteninformationen und den Strukturinformationen über den Baum durch die Wegsteuereinheit.

13. Verfahren nach Anspruch 9, das ferner umfasst:
falls Bandbreiteninformationen in der Verbindungsherstellungsanforderung enthalten sind, Senden der Bandbreiteninformationen an die Verbindungsmanagementeinheit durch das Verbindungssteuerelement; und
wenn bestimmt wird, dass die Bandbreiteninformationen in den empfangenen Weginformationen enthalten sind, Senden der Bandbreiteninformationen an ein Datensystem durch die Verbindungsmanagementeinheit und Reservieren eines Betriebsmittels gemäß den Bandbreiteninformationen und Ausführen der Verkehrssteuerung durch das Datensystem.

14. Verfahren nach Anspruch 5, das ferner umfasst:
Empfangen einer Verbindungsfreigabeanforderung durch ein Verbindungssteuerelement, Erfassen von Weginformationen, die der Verbindungsfreigabeanforderung entsprechen, und Senden einer Kennungsregistrierungs-Freigabeanforderung an eine Verbindungsmanagementeinheit, die jeder Brücke entspricht, über die die Verbindung führt, gemäß den Weginformationen; und
Entfernen von entsprechenden Weiterleitungsweginformationen in einem Datensystem einer Brücke, die der Verbindungsmanagementeinheit entspricht, durch die Verbindungsmanagementeinheit, gemäß der empfangenen Kennungsregistrierungs-Freigabeanforderung.

15. Verfahren nach Anspruch 14, wobei
das Verbindungssteuerelement die Weginformationen, die der Verbindung, die freigegeben werden muss, entsprechen, aus den im Verbindungssteuerelement selbst gespeicherten Weginformationen erfasst; und
falls das Verbindungssteuerelement eine Vorgänger-Nachfolger-Struktur aufweist, ein Vorgänger-Verbindungssteuerelement im Verbindungssteuerelement die Weginformationen, die der Verbindung, die freigegeben werden muss, entsprechen, gemäß im Vorgänger-Verbindungssteuerelement selbst gespeicherten Weginformationen oder in einem Nachfolger-Verbindungssteuerelement gespeicherten Weginformationen erfasst.

16. Verfahren nach einem der Ansprüche 5 bis 15, wobei, falls die Verbindung eine Punkt-zu-Punkt-Verbindung ist, die Verbindungsherstellungsanforderung eine MAC-Adresse einer Quellbrücke, eine MAC-Adresse einer Zielbrücke und Kennungsinformationen, die die Verbindung identifizieren, enthält; und die Kennungsinformationen einen Identifizierer eines stromaufwärts gelegenen VLAN und/oder eine MAC-Adresse einer stromaufwärts gelegenen Zielbrücke enthalten; oder die Kennungsinformationen einen Identifizierer eines stromaufwärts gelegenen VLAN und/oder eine MAC-Adresse einer Zielbrücke und einen Identifizierer eines stromabwärts gelegenen VLAN und/oder eine MAC-Adresse einer Zielbrücke enthalten;
falls die Verbindung eine Punkt-zu-Mehrpunkt-Verbindung ist, die Verbindungsherstellungsanforderung eine MAC-Adresse einer Quellbrücke, MAC-Adressen einer Vielzahl von Zielbrücken und Kennungsinformationen, die die Verbindung identifizieren, enthält; und die Kennungsinformationen einen VLAN-Identifizierer und/oder eine *Multicast*-MAC-Adresse enthalten; und
falls die Verbindung eine Mehrpunkt-zu-Mehrpunkt-Verbindung ist, die Verbindungsherstellungsanforderung eine Vielzahl von Brücken und Kennungsinformationen, die die Verbindung identifizieren, enthält; und die Kennungsinformationen einen VLAN-Identifizierer und/oder eine *Multicast-MAC-*Adresse enthalten.

17. Verfahren nach einem der Ansprüche 5 bis 15, das ferner umfasst:
Aufrechterhalten einer durch einen Ausfall beeinflussten Verbindung durch ein Verbindungssteuerelement gemäß von einem Datensystem empfangenen Verbindungsausfall-Zustandsinformationen oder von einer Verbindungsmanagementeinheit empfangenen Kennungs-Ausfallzustandsinformationen; und
falls das Verbindungssteuerelement eine Vorgänger-Nachfolger-Struktur aufweist, Aufrechterhalten der durch den Ausfall beeinflussten Verbindung durch ein Vorgänger-Verbindungssteuerelement gemäß den vom Datensystem empfangenen Verbindungsausfall-Zustandsinformationen oder den von der Verbindungsmanagementeinheit empfangenen Kennungs-Ausfallzustandsinformationen.

18. Verfahren nach einem der Ansprüche 5 bis 15, wobei, falls das Verbindungssteuerelement eine Vorgänger-Nachfolger-Struktur aufweist,
Informationen zwischen einem Vorgänger-Verbindungssteuerelement und der Wegsteuereinheit ausgetauscht werden und Verbindungskonfigurationsinformationen zwischen dem Vorgänger-Verbindungssteuerelement und einem Nachfolger-Verbindungssteuerelement ausgetauscht werden oder die Verbindungskonfigurationsinformationen und Verbindungsausfall-Zustandsinformationen zwischen dem Vorgänger-Verbindungssteuerelement und dem Nachfolger-Verbindungssteuerelement ausgetauscht werden;
gemäß den Verbindungsausfall-Zustandsinformationen das Vorgänger-Verbindungssteuerelement eine durch einen Ausfall beeinflusste Verbindung aufrechterhält; und
gemäß den empfangenen Verbindungskonfigurationsinformationen das Nachfolger-Verbindungssteuerelement eine Kennungsregistrierungs-Benutzungsanforderung oder eine Kennungsregistrierungs-Freigabeanforderung an eine Verbindungsmanagementeinheit, die dem Nachfolger-Verbindungssteuerelement entspricht, sendet.

## Revendications

1. Système de commande dans un réseau Ethernet, comprenant une entité de gestion de liaison, une entité de commande de route et un élément de commande de connexion, dans lequel:
l'entité de commande de route est adaptée pour acquérir des informations de liaison du réseau Ethernet qui sont obtenues par l'intermédiaire d'un protocole de commande de couche 2 de réseau du réseau Ethernet, établir et maintenir de manière centralisée une topologie du réseau Ethernet conformément aux informations de liaison, et calculer une route entre des ponts d'extrémité pour une demande d'établissement de connexion reçue par le système de commande conformément à la topologie de réseau;
l'entité de gestion de liaison, qui correspond à un pont, est adaptée pour détecter et délivrer des informations de liaison entre un pont correspondant à l'entité de gestion de liaison et un pont voisin à une entité de commande de route conformément à un protocole de commande de couche 2 d'un réseau Ethernet, et configurer des informations de trajet de réexpédition d'un système de données du pont correspondant à l'entité de gestion de liaison conformément aux informations d'une demande d'utilisation d'enregistrement d'étiquette ou d'une demande de libération d'enregistrement d'étiquette envoyée par un élément de commande de connexion; et
l'élément de commande de connexion étant adapté pour acquérir, lors de la réception d'une demande d'établissement de connexion, des informations de route d'une connexion devant être établie de l'entité de commande de route, et envoyer une demande d'utilisation d'enregistrement d'étiquette ou une demande de libération d'enregistrement d'étiquette à chacune des entités de gestion de liaison correspondant aux ponts par lesquels passe la route.

2. Système de commande selon la revendication 1, dans lequel l'entité de commande de route comprend un module de maintien de topologie de réseau et un module de calcul de route, dans lequel
le module de maintien de topologie de réseau est adapté pour établir et maintenir des informations de la topologie de réseau du réseau Ethernet conformément aux informations de liaison reçues des entités de gestion de liaison, et modifier les informations de la topologie de réseau conformément aux informations de route de la connexion devant être établie ou libérée; et
le module de calcul de route est adapté pour calculer et délivrer les informations de route de la connexion devant être établie à l'élément de commande de connexion conformément aux informations de la topologie de réseau.

3. Système de commande selon la revendication 1, dans lequel l'élément de commande de connexion présente une structure centralisée ou une structure du type parent-enfant;
s'il s'agit de la structure centralisée, l'élément de commande de connexion commande la connexion d'une pluralité de ponts dans le réseau de pontage, et l'élément de commande de connexion utilisant la structure centralisée est une entité de commande centralisée;
s'il s'agit de la structure du type parent-enfant, l'élément de commande de connexion comprend un élément de commande de connexion parent et des éléments de commande de connexion enfant, dont le nombre correspond au nombre des ponts;
l'élément de commande de connexion parent est une entité de commande centralisée et, lors de la réception d'une demande d'établissement de connexion ou d'une demande de libération de connexion, l'élément de commande de connexion parent acquiert les informations de route de la connexion devant être établie ou libérée, et envoie des informations de configuration de connexion de chacun des éléments de commande de connexion enfant correspondant aux ponts par lesquels passe la route; et
les éléments de commande de connexion enfant utilisent une méthode de commande répartie et sont des entités de commande réparties, chacun des éléments de commande de connexion enfant commande un pont unique correspondant à l'élément de commande de connexion enfant, et chacun des éléments de commande de connexion enfant envoie une demande d'utilisation d'enregistrement d'étiquette ou une demande de libération d'enregistrement d'étiquette à une entité de gestion de liaison correspondant à l'élément de commande de connexion enfant conformément aux informations de configuration de connexion envoyées par l'élément de commande de connexion parent.

4. Système de commande selon la revendication 1, dans lequel l'entité de commande de route et l'élément de commande de connexion sont des entités de commande centralisée, et un canal de signalisation utilisant une configuration de commutation de couche 2 est prévu entre l'entité de commande centralisée et l'entité de gestion de liaison et est adapté pour échanger des informations entre l'entité de commande centralisée et l'entité de gestion de liaison.

5. Procédé de transport d'un paquet de données dans un réseau Ethernet, comprenant les étapes:
la détection et la fourniture, par une entité de gestion de liaison, d'informations de liaison entre un pont correspondant à l'entité de gestion de liaison et un pont voisin, à une entité de commande de route conformément à un protocole de commande de couche 2 d'un réseau Ethernet;
l'acquisition, conformément à un protocole de commande de couche 2 du réseau Ethernet, par une entité de commande de route, d'informations de liaison du réseau Ethernet, et l'établissement et le maintien de manière centralisée d'une topologie de réseau du réseau Ethernet conformément aux informations de liaison;
le calcul, conformément à la topologie de réseau, par l'entité de commande de route, d'une route entre des ponts d'extrémité d'une connexion pour une demande d'établissement de connexion reçue par le système de commande,
l'acquisition, par un élément de commande de connexion, lors de la réception d'une demande d'établissement de connexion, de la route d'une connexion devant être établie de l'entité de commande de route, et l'envoi d'une demande d'utilisation d'enregistrement d'étiquette ou d'une demande de libération d'enregistrement d'étiquette à chacune des entités de gestion de liaison correspondant aux ponts par lesquels passe la route;
la configuration, par l'entité de gestion de liaison, d'informations de trajet de réexpédition d'un système de données de chaque pont par lequel passe la connexion conformément à des informations de la demande d'utilisation d'enregistrement d'étiquette ou de la demande de libération d'enregistrement d'étiquette envoyée par l'élément de commande de connexion; et
la réexpédition d'un paquet de données par le système de données de chaque pont conformément aux informations de trajet de réexpédition.

6. Procédé selon la revendication 5, dans lequel l'étape d'acquisition d'informations de liaison du réseau Ethernet, par une entité de commande de route, et d'établissement et de maintien de manière centralisée d'une topologie de réseau du réseau Ethernet conformément aux informations de liaison comprend:
lors de la détection d'une liaison entre un pont et un pont voisin, ou lors de la détection d'une modification d'informations d'état d'une liaison, le signalement, par l'entité de gestion de liaison, des informations de liaison conformément au protocole de commande de couche 2 du réseau Ethernet; et
l'établissement et le maintien de la topologie de réseau du réseau Ethernet conformément aux informations de liaison signalées par l'entité de gestion de liaison, et/ou à des informations de configuration de ressources configurées et envoyées par un plan de gestion.

7. Procédé selon la revendication 6, dans lequel les informations de liaison comprennent des informations de configuration de la liaison détectée, des informations de défaut de liaison, et des informations d'élimination de défauts de liaison; et
lors de la réception des informations de configuration de la liaison détectée, l'entité de commande de route ajoute la liaison à la topologie de réseau; lors de la réception des informations de défaut de liaison, l'entité de commande de route règle l'état de la liaison correspondante à un état défectueux; et lors de la réception des informations d'élimination de défauts de liaison, l'entité de commande de route règle l'état de la liaison correspondante à un état normal.

8. Procédé selon la revendication 6, dans lequel l'étape d'envoi d'une demande d'utilisation d'enregistrement d'étiquette ou d'une demande de libération d'enregistrement d'étiquette à chacune des entités de gestion de liaison, et de configuration, par l'entité de gestion de liaison, d'informations de trajet de réexpédition d'un système de données de chaque pont par lequel passe la connexion, comprend:
l'envoi, conformément à des informations de route, dans la demande d'établissement de connexion, par un élément de commande de connexion, d'une demande d'utilisation d'enregistrement d'étiquette à l'entité de gestion de liaison correspondant à chaque pont indiqué dans les informations de route; et
la configuration, conformément à la demande d'utilisation d'enregistrement d'étiquette reçue, par l'entité de gestion de liaison, des informations de trajet de réexpédition dans le système de données du pont correspondant à l'entité de gestion de liaison.

9. Procédé selon la revendication 5, dans lequel l'étape de calcul conformément à la topologie de réseau, par l'entité de commande de route, d'une route entre des ponts d'extrémité d'une connexion pour une demande d'établissement de connexion reçue par le système de commande, d'envoi d'une demande d'utilisation d'enregistrement d'étiquette ou d'une demande de libération d'enregistrement d'étiquette à chacune des entités de gestion de liaison, et de configuration, par l'entité de gestion de liaison, d'informations de trajet de réexpédition d'un système de données de chaque pont par lequel passe la connexion, comprend:
la réception, par un élément de commande de connexion, de la demande d'établissement de connexion, et l'envoi d'informations d'une demande d'utilisation de route de connexion à l'entité de commande de route;
le calcul, conformément à la topologie de réseau, par l'entité de commande de route, d'une route entre des ponts d'extrémité d'une connexion pour la demande d'utilisation de route de connexion reçue, et le renvoi des informations de route calculées à l'élément de commande de connexion;
l'envoi, conformément aux informations de route reçues, par l'élément de commande de connexion, d'une demande d'utilisation d'enregistrement d'étiquette à l'entité de gestion de liaison correspondant à chaque pont par lequel passe la connexion; et
la configuration, conformément à la demande d'utilisation d'enregistrement d'étiquette reçue, par l'entité de gestion de liaison, des informations de trajet de réexpédition dans le système de données du pont correspondant à l'entité de gestion de liaison.

10. Procédé selon la revendication 9, dans lequel la demande d'établissement de connexion est une demande d'établissement de connexion point à point, et les informations de la demande d'utilisation de route de connexion comportent une adresse MAC d'un pont source et une adresse MAC d'un pont destinataire; ou les informations de la demande d'utilisation de route de connexion comportent des informations de largeur de bande et/ou un attribut de direction de connexion, en plus d'une adresse MAC d'un pont source et d'une adresse MAC d'un pont destinataire;
l'étape de calcul, conformément à la topologie de réseau, par l'entité de commande de route, d'une route entre des ponts d'extrémité d'une connexion pour la demande d'utilisation de route de connexion reçue et de renvoi des informations de route calculées à l'élément de commande de connexion comporte:
le calcul, conformément à une topologie de réseau en cours d'activité, par l'entité de commande de route, d'une route point à point entièrement explicite avec des ports d'entrée et de sortie pour la demande d'utilisation de route de connexion reçue, et le renvoi des informations de route à l'élément de commande de connexion; et
si les informations de largeur de bande sont contenues dans la demande d'utilisation de route de connexion, la mise à jour de la topologie de réseau par l'entité de commande de route conformément aux informations de largeur de bande et à la route point à point calculée entièrement explicite.

11. Procédé selon la revendication 9, dans lequel la demande d'établissement de connexion est une demande d'établissement de connexion de diffusion point à multipoints, et les informations de la demande d'utilisation de route de connexion comportent une adresse MAC d'un pont source et des adresses MAC d'une pluralité de ponts destinataires; ou
les informations de la demande d'utilisation de route de connexion comportent des informations de largeur de bande et/ou une condition de contrainte de pont, en plus d'une adresse MAC d'un pont source et d'adresses MAC d'une pluralité de ponts destinataires;
l'étape de calcul, conformément à la topologie de réseau, par l'entité de commande de route, d'une route entre des ponts d'extrémité d'une connexion pour la demande d'utilisation de route de connexion reçue, et de renvoi des informations de route calculées à l'élément de commande de connexion, comporte:
le calcul, par l'entité de commande de route, en utilisant le pont source en tant que pont racine, d'un arbre recouvrant (*spanned tree*) pour la demande d'utilisation de route de connexion reçue conformément à une topologie de réseau en cours d'activité, et l'élagage de feuilles de l'arbre qui ne sont pas des adresses destinataires;
le renvoi, par l'entité de commande de route, d'informations de structure de l'arbre élagué en tant qu'informations de route à l'élément de commande de connexion; et
si les informations de largeur de bande sont contenues dans la demande d'utilisation de route de connexion, la mise à jour de la topologie de réseau par l'entité de commande de route conformément aux informations de largeur de bande et aux informations de structure de l'arbre.

12. Procédé selon la revendication 9, dans lequel la demande d'établissement de connexion est une demande d'établissement de connexion de diffusion multipoints à multipoints, et les informations de la demande d'utilisation de route de connexion comportent des adresses MAC d'une pluralité de ponts; ou
les informations de la demande d'utilisation de route de connexion comportent des informations de largeur de bande, et/ou des informations contenant des ponts, et/ou une condition de contrainte de pont, en plus d'adresses MAC d'une pluralité de ponts;
l'étape de calcul, conformément à la topologie de réseau, par l'entité de commande de route, d'une route entre des ponts d'extrémité d'une connexion pour la demande d'utilisation de route de connexion reçue, et de renvoi des informations de route calculées à l'élément de commande de connexion, comporte:
l'acquisition, par l'entité de commande de route, des informations de pont racine dans la demande d'utilisation de route de connexion; ou s'il n'existe pas d'informations de pont racine dans la demande d'utilisation de route de connexion, la détermination d'un pont racine par l'entité de commande de route conformément à une stratégie prédéterminée;
le calcul, conformément à une topologie de réseau en cours d'activité et au pont racine, par l'entité de commande de route, d'un arbre recouvrant pour la demande d'utilisation de route de connexion reçue, et l'élagage de l'arbre recouvrant afin que chaque feuille de l'arbre recouvrant élagué soit un pont dans la demande d'utilisation de route de connexion;
le renvoi, par l'entité de commande de route, d'informations de structure de l'arbre élagué en tant qu'informations de route à l'élément de commande de connexion; et
si des informations de débit d'informations d'engagement sont contenues dans la demande d'utilisation de route de connexion, la mise à jour de la topologie de réseau par l'entité de commande de route conformément aux informations de largeur de bande et aux informations de structure de l'arbre.

13. Procédé selon la revendication 9, comprenant en outre:
si des informations de largeur de bande sont contenues dans la demande d'établissement de connexion, l'envoi, par l'élément de commande de connexion, des informations de largeur de bande à l'entité de gestion de liaison; et
lors de la détermination du fait que les informations de largeur de bande sont contenues dans les informations de route reçues, l'envoi, par l'entité de gestion de liaison, des informations de largeur de bande à un système de données, et la réservation d'une ressource en fonction des informations de largeur de bande et l'exécution d'une commande de trafic par le système de données.

14. Procédé selon la revendication 5, comprenant en outre:
la réception, par un élément de commande de connexion, d'une demande de libération de connexion, l'acquisition d'informations de route correspondant à la demande de libération de connexion, et l'envoi d'une demande de libération d'enregistrement d'étiquette à une entité de gestion de liaison correspondant à chaque pont par lequel passe la connexion, conformément aux informations de route; et
l'élimination, conformément à la demande de libération d'enregistrement d'étiquette reçue, par l'entité de gestion de liaison, d'informations de trajet de réexpédition correspondantes dans un système de données d'un pont correspondant à l'entité de gestion de liaison.

15. Procédé selon la revendication 14, dans lequel
l'élément de commande de connexion acquiert les informations de route correspondant à la connexion devant être libérée d'informations de route stockées dans l'élément de commande de connexion lui-même; et
si l'élément de commande de connexion présente une structure du type parent-enfant, un élément de commande de connexion parent contenu dans l'élément de commande de connexion acquiert les informations de route correspondant à la connexion devant être libérée en fonction d'informations de route stockées dans l'élément de commande de connexion parent lui-même ou d'informations de route stockées dans un élément de commande de connexion enfant.

16. Procédé selon l'une quelconque des revendications 5 à 15, dans lequel, si la connexion est une connexion point à point, la demande d'établissement de connexion contient une adresse MAC d'un pont source, une adresse MAC d'un pont destinataire et des informations d'étiquette identifiant la connexion; et les informations d'étiquette contiennent un identifiant de VLAN amont et/ou une adresse MAC d'un pont destinataire amont; ou les informations d'étiquette contiennent un identifiant de VLAN amont et/ou une adresse MAC d'un pont destinataire, et un identifiant de VLAN aval et/ou une adresse MAC d'un pont destinataire;
si la connexion est une connexion point à multipoints, la demande d'établissement de connexion contient une adresse MAC d'un pont source, des adresses MAC d'une pluralité de ponts destinataires et des informations d'étiquette identifiant la connexion; et les informations d'étiquette contiennent un identifiant de VLAN et/ou une adresse MAC de multidiffusion; et
si la connexion est une connexion multipoints à multipoints, la demande d'établissement de connexion contient une pluralité de ponts et des informations d'étiquette identifiant la connexion; et les informations d'étiquette contiennent un identifiant de VLAN et/ou une adresse MAC de multidiffusion.

17. Procédé selon l'une quelconque des revendications 5 à 15, comprenant en outre:
le maintien, par un élément de commande de connexion, d'une connexion affectée par un défaut, conformément à des informations d'état de défaut de connexion reçues d'un système de données ou à des informations d'état de défaut d'étiquette reçues d'une entité de gestion de liaison; et
si l'élément de commande de connexion est une structure du type parent-enfant, le maintien, par un élément de commande de connexion parent, de la connexion affectée par le défaut, conformément aux informations d'état de défaut de connexion reçues du système de données ou aux informations d'état de défaut d'étiquette reçues de l'entité de gestion de liaison.

18. Procédé selon l'une quelconque des revendications 5 à 15, dans lequel, si l'élément de commande de connexion est une structure du type parent-enfant,
des informations sont échangées entre un élément de commande de connexion parent et l'entité de commande de route, et des informations de configuration de connexion sont échangées entre l'élément de commande de connexion parent et un élément de commande de connexion enfant, ou les informations de configuration de connexion et les informations d'état de défaut de connexion sont échangées entre l'élément de commande de connexion parent et l'élément de commande de connexion enfant;
conformément aux informations d'état de défaut de connexion, l'élément de commande de connexion parent maintient une connexion affectée par un défaut; et
conformément aux informations de configuration de connexion reçues, l'élément de commande de connexion enfant envoie une demande d'utilisation d'enregistrement d'étiquette ou une demande de libération d'enregistrement d'étiquette à une entité de gestion de liaison correspondant à l'élément de commande de connexion enfant.
